# EUROPEAN PATENT SPECIFICATION

(11) **EP 4 054 222 B1**
(45) Date of publication and mention of the grant of the patent: **25.02.2026**
(21) Application number: 20897586.2
(22) Date of filing: 30.10.2020
(51) Int. Cl.: H04W 4/029, H04W 12/45, H04W 4/60, H04W 12/63

(54) **USER IDENTITY ASSOCIATION METHOD AND COMMUNICATION APPARATUS**
VERFAHREN ZUR ZUORDNUNG DER BENUTZERIDENTITÄT UND KOMMUNIKATIONSVORRICHTUNG
PROCÉDÉ D'ASSOCIATION D'IDENTITÉS D'UTILISATEURS ET APPAREIL DE COMMUNICATION

(30) Priority: 06.12.2019 CN 201911245133
(43) Date of publication of application: 07.09.2022
(73) Proprietor: HUAWEI TECHNOLOGIES CO., LTD., Shenzhen, Guangdong 518129 (CN)
(72) Inventor: CAI, Yu, Shenzhen, Guangdong 518129 (CN); YAO, Chuting, Shenzhen, Guangdong 518129 (CN); JIN, Hui, Shenzhen, Guangdong 518129 (CN); WANG, Jian, Shenzhen, Guangdong 518129 (CN)
(74) Representative: MERH-IP Matias Erny Reichl Hoffmann Patentanwälte PartG mbB
(86) International application number: PCT/CN2020/125133
(87) International publication number: WO 2021/109765

(56) References cited:
- EP-A1- 2 962 519
- CN-A- 105 072 706
- CN-A- 110 139 356
- CN-A- 110 234 176
- CN-A- 110 418 436
- US-A1- 2010 113 015
- MOTOROLA MOBILITY ET AL: "Solution for MT service delivery when multiple USIMs are registered in the same serving PLMN", vol. SA WG2, no. Reno, USA; 20191118 - 20191122, 8 November 2019 (2019-11-08), XP051821447, Retrieved from the Internet <URL:https://ftp.3gpp.org/tsg_sa/WG2_Arch/TSGS2_136_Reno/Docs/S2-1911355.zip S2-1911355_MuSIM_Sol-Paging_samePLMN_v02.doc> [retrieved on 20191108]
- SAMSUNG ET AL: "Sol for providing assistance information to the UE in same PLMN case", vol. SA WG2, no. Reno,USA; 20191118 - 20191122, 8 November 2019 (2019-11-08), XP051821951, Retrieved from the Internet <URL:https://ftp.3gpp.org/tsg_sa/WG2_Arch/TSGS2_136_Reno/Docs/S2-1911892.zip S2-1911892-MUSIM-samePLMN_v1.1.doc> [retrieved on 20191108]
- QUALCOMM INCORPORATED ET AL: "Avoidance of paging collisions to minimize outage of services", vol. SA WG2, no. San Jose Del Cabo; 20170626 - 20170630, 25 June 2017 (2017-06-25), XP051303098, Retrieved from the Internet <URL:http://www.3gpp.org/ftp/Meetings_3GPP_SYNC/SA2/Docs/> [retrieved on 20170625]

## Description

This application claims priority to Chinese Patent Application No. 201911245133.4, filed with the China National Intellectual Property Administration on December 6, 2019 and entitled "USER IDENTITY ASSOCIATION METHOD AND COMMUNICATIONS APPARATUS".

### TECHNICAL FIELD

This application relates to the field of communications technologies, and in particular, to a user identity association method and an apparatus.

### BACKGROUND

With development of communications technologies, many mobile terminals each may include two user identities. For example, two subscriber identity module (subscriber identity module, SIM) cards may be inserted into one mobile terminal, and the two cards each may be in an in-service standby state. When two user identities in a mobile terminal belong to a same operator, a communications system may be further optimized. For example, one user identity may act as proxy for the other user identity to perform paging, switching, and tracking area update (tracking area update, TAU), to save network resources and reduce power consumption of the mobile terminal. However, the premise of the foregoing optimization is that a network can associate two user identities with one mobile terminal.
Document MOTOROLA MOBILITY ET AL: "Solution for MT service delivery when multiple USIMs are registered in the same serving PLMN", 3GPP DRAFT; S2-1911355, vol. SA WG2, no. Reno, USA, 8 November 2019 generally proposes a solution for the paging delivery when multiple USIMs are registered in the same serving PLMN.
Document SAMSUNG ET AL: "Sol for providing assistance information to the UE in same PLMN case", 3GPP DRAFT; S2-1911892, vol. SA WG2, no. Reno, USA, 8 November 2019 generally proposes a solution for the paging delivery when multiple USIMs are registered in the same serving PLMN generally proposes a solution for delivering paging.

### SUMMARY

This application provides a user identity association method, to associate two user identities with one terminal device. In particular, embodiments of the present application are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of the present application (or the present disclosure) provide user identity association method, a communications apparatus, and a computer-readable storage medium.

According to a first aspect, a user identity association method is provided. The method is used in a network communications system. The network communications system includes a terminal device, a first device, and a second device. The terminal device includes a first user identity and a second user identity. The first device serves the first user identity, and the second device serves the second user identity. The method includes: The first device receives a first message from the terminal device, where the first message is sent by the terminal device by using the first user identity, the first message is used to indicate to request the first user identity to be associated with the second user identity, and the first message is further used to indicate information about the second user identity. The first device sends a second message to the second device based on the information about the second user identity, where the second message is used to indicate to request the first user identity to be associated with the second user identity.

Based on the foregoing technical solution, the first device serving the first user identity in the terminal device may send the second message to the second device serving the second user identity, to request the first user identity to be associated the second user identity. In this way, two user identities can be associated with one terminal device.

With reference to the first aspect, in some implementations of the first aspect, the first message further includes one or more of the following information: proxy paging indication information, proxy TAU indication information, and proxy switching indication information.

With reference to the first aspect, in some implementations of the first aspect, the second message further includes one or more of the following information: proxy paging indication information, proxy TAU indication information, and proxy switching indication information.

With reference to the first aspect, in some implementations of the first aspect, the method further includes: The first device receives a third message from the second device, where the third message is used by the first device to determine that the first user identity is associated with the second user identity, and the third message is further used to indicate information about the first user identity.

With reference to the first aspect, in some implementations of the first aspect, the method further includes: The first device sends a fourth message to the terminal device based on the third message, where the fourth message is used by the terminal device to determine that the first user identity is associated with the second user identity.

With reference to the first aspect, in some implementations of the first aspect, the method further includes: After receiving the first message, the first device determines, based on at least one of the following information, whether the first user identity is allowed to be associated with the second user identity: capability information of the first device, subscription information of the first user identity, and location information of the terminal device.

With reference to the first aspect, in some implementations of the first aspect, the method further includes: The first device sends a fifth message to the terminal device based on information about the first user identity, where the fifth message is used to indicate to allow the first user identity to be associated with the second user identity.

With reference to the first aspect, in some implementations of the first aspect, before the first device receives the first message from the terminal device, the method further includes: The first device sends first indication information to the terminal device, where the first indication information indicates whether the first device supports user identity association.

With reference to the first aspect, in some implementations of the first aspect, after the first user identity is associated with the second user identity, the method further includes: The first device receives a sixth message from the terminal device, where the sixth message is sent by the terminal device by using the first user identity, the sixth message is used to indicate to request to remove the association between the first user identity and the second user identity, and the sixth message is further used to indicate the information about the second user identity.

With reference to the first aspect, in some implementations of the first aspect, the method further includes: The first device sends a seventh message to the second device based on the information about the second user identity, where the seventh message is used to indicate to remove the association between the first user identity and the second user identity.

With reference to the first aspect, in some implementations of the first aspect, the sixth message further includes one or more of the following information: proxy paging removal indication information, proxy TAU removal indication information, and proxy switching removal indication information.

With reference to the first aspect, in some implementations of the first aspect, the seventh message further includes one or more of the following information: proxy paging removal indication information, proxy TAU removal indication information, and proxy switching removal indication information.

According to a second aspect, a user identity association method is provided. The method is used in a network communications system. The network communications system includes a terminal device, a first device, and a second device. The terminal device includes a first user identity and a second user identity. The first device serves the first user identity, and the second device serves the second user identity. The method includes: The second device receives a second message from the first device, where the second message is sent by the first device based on a first message from the terminal device, the first message is sent by the terminal device by using the first user identity, the first message is used to indicate to request the first user identity to be associated with the second user identity, the first message is further used to indicate information about the second user identity, and the second message is used to indicate to request the first user identity to be associated with the second user identity. The second device sends a third message to the first device, where the third message is used by the first device to determine that the first user identity is associated with the second user identity, and the third message is used to indicate information about the first user identity.

Based on the foregoing technical solution, the first device serving the first user identity in the terminal device may send the second message to the second device serving the second user identity, to request the first user identity to be associated the second user identity. Further, the third message sent by the second device to the first device may be used by the first device to determine that the first user identity is associated with the second user identity. In this way, two user identities can be associated with one terminal device.

With reference to the second aspect, in some implementations of the second aspect, the first message further includes one or more of the following information: proxy paging indication information, proxy TAU indication information, and proxy switching indication information.

With reference to the second aspect, in some implementations of the second aspect, the second message further includes one or more of the following information: proxy paging indication information, proxy TAU indication information, and proxy switching indication information.

With reference to the second aspect, in some implementations of the second aspect, before the second device sends the third message to the first device, the method further includes: The second device receives an eighth message from the terminal device, where the eighth message is sent by the terminal device by using the second user identity, the eighth message is used to indicate to request the first user identity to be associated with the second user identity, and the eighth message is further used to indicate the information about the first user identity.

With reference to the second aspect, in some implementations of the second aspect, the eighth message further includes one or more of the following information: proxy paging indication information, proxy TAU indication information, and proxy switching indication information.

With reference to the second aspect, in some implementations of the second aspect, the method further includes: After receiving the eighth message, the second device determines, based on at least one of the following information, whether the first user identity is allowed to be associated with the second user identity: capability information of the second device, subscription information of the second user identity, and location information of the terminal device.

With reference to the second aspect, in some implementations of the second aspect, the method further includes: The second device sends a ninth message to the terminal device, where the ninth message is used to indicate to allow the first user identity to be associated with the second user identity.

With reference to the second aspect, in some implementations of the second aspect, before the second device sends the third message to the first device, the method further includes: The second device sends a tenth message to the terminal device, where the tenth message is used to indicate whether the first user identity is allowed to be associated with the second user identity, and the tenth message is further used to indicate the information about the first user identity.

With reference to the second aspect, in some implementations of the second aspect, the tenth message further includes one or more of the following information: proxy paging indication information, proxy TAU indication information, and proxy switching indication information.

With reference to the second aspect, in some implementations of the second aspect, the method further includes: The second device receives an eleventh message from the terminal device, where the eleventh message is sent by the terminal device by using the second user identity, and the eleventh message is used to indicate to allow the first user identity to be associated with the second user identity.

With reference to the second aspect, in some implementations of the second aspect, before the second device receives the second message from the first device, the method further includes: The second device sends second indication information to the terminal device, where the second indication information indicates whether the second device allows user identity association.

With reference to the second aspect, in some implementations of the second aspect, before the second device sends the third message to the first device, the method further includes: The second device determines, based on the second message and at least one of the following information, whether the first user identity is allowed to be associated with the second user identity: capability information of the second device, subscription information of the second user identity, and location information of the terminal device.

With reference to the second aspect, in some implementations of the second aspect, before the second device sends the third message to the first device, the method further includes: The second device determines, based on the second message and whether the eighth message is received, whether the first user identity is allowed to be associated with the second user identity.

With reference to the second aspect, in some implementations of the second aspect, after the first user identity is associated with the second user identity, the method further includes: The second device receives a seventh message from the first device, where the seventh message is sent by the first device based on a sixth message from the terminal device, the sixth message is sent by the terminal device by using the first user identity, the sixth message is used to indicate to remove the association between the first user identity and the second user identity, the sixth message is further used to indicate the information about the second user identity, and the seventh message is used to indicate to remove the association between the first user identity and the second user identity.

With reference to the second aspect, in some implementations of the second aspect, the sixth message further includes one or more of the following information: proxy paging removal indication information, proxy TAU removal indication information, and proxy switching removal indication information.

With reference to the second aspect, in some implementations of the second aspect, the seventh message further includes one or more of the following information: proxy paging removal indication information, proxy TAU removal indication information, and proxy switching removal indication information.

According to a third aspect, a user identity association method is provided. The method is used in a network communications system. The network communications system includes a terminal device, a first device, and a second device. The terminal device includes a first user identity and a second user identity. The first device serves the first user identity, and the second device serves the second user identity. The method includes: The terminal device sends a first message to the first device by using the first user identity, where the first message is used to indicate to request the first user identity to be associated with the second user identity, and the first message is further used to indicate information about the second user identity. The terminal device receives a fourth message from the first device by using the first identity, where the fourth message is sent by the first device based on a third message, the third message is used by the first device to determine that the first user identity is associated with the second user identity, the third message is further used to indicate information about the first user identity, and the fourth message is used by the terminal device to determine that the first user identity is associated with the second user identity.

Based on the foregoing technical solution, the first device serving the first user identity in the terminal device may send the second message to the second device serving the second user identity, to request the first user identity to be associated the second user identity. Further, the terminal device may determine, based on the fourth message received from the first device, that the first user identity is associated with the second user identity. In this way, two user identities can be associated with one terminal device.

With reference to the third aspect, in some implementations of the third aspect, the first message further includes one or more of the following information: proxy paging indication information, proxy TAU indication information, and proxy switching indication information.

With reference to the third aspect, in some implementations of the third aspect, the method further includes: The terminal device receives a fifth message from the first device by using the first user identity, where the fifth message is used to indicate to allow the first user identity to be associated with the second user identity.

With reference to the third aspect, in some implementations of the third aspect, the method further includes: The terminal device sends an eighth message to the second device by using the second user identity, where the eighth message is used to indicate to request the first user identity to be associated with the second user identity, and the eighth message includes or indicates the information about the first user identity.

With reference to the third aspect, in some implementations of the third aspect, the eighth message further includes one or more of the following information: proxy paging indication information, proxy TAU indication information, and proxy switching indication information.

With reference to the third aspect, in some implementations of the third aspect, the method further includes: The terminal device receives a ninth message from the second device by using the second user identity, where the ninth message is used to indicate to allow the first user identity to be associated with the second user identity.

With reference to the third aspect, in some implementations of the third aspect, the method further includes: The terminal device receives a tenth message from the second device by using the second user identity, where the tenth message is used to indicate whether the first user identity is allowed to be associated with the second user identity, and the tenth message is further used to indicate the information about the first user identity.

With reference to the third aspect, in some implementations of the third aspect, the tenth message further includes one or more of the following information: proxy paging indication information, proxy TAU indication information, and proxy switching indication information.

With reference to the third aspect, in some implementations of the third aspect, the method further includes: The terminal device determines that the first user identity is allowed to be associated with the second user identity. The terminal device sends an eleventh message to the second device by using the second user identity, where the eleventh message is used to indicate to allow the first user identity to be associated with the second user identity.

With reference to the third aspect, in some implementations of the third aspect, after the first user identity is associated with the second user identity, the method further includes: The terminal device sends a sixth message to the first device by using the first user identity, where the sixth message is used to request to indicate to remove the association between the first user identity and the second user identity, and the sixth message is further used to indicate the information about the second user identity.

With reference to the third aspect, in some implementations of the third aspect, the sixth message further includes one or more of the following information: proxy paging removal indication information, proxy TAU removal indication information, and proxy switching removal indication information.

According to a fourth aspect, a communications apparatus is provided, including a transceiver unit and a processing unit. The transceiver unit is configured to receive a first message from a terminal device, where the first message is sent by the terminal device by using a first user identity, the first message is used to indicate to request the first user identity to be associated with a second user identity, and the first message is further used to indicate information about the second user identity. The transceiver unit is further configured to send a second message to a second device based on the information about the second user identity, where the second message is used to indicate to request the first user identity to be associated with the second user identity. The transceiver unit is further configured to receive a third message from the second device, where the third message is used by a first device to determine that the first user identity is associated with the second user identity, and the third message is further used to indicate information about the first user identity. The transceiver unit is further configured to send a fourth message to the terminal device based on the third message, where the fourth message is used by the terminal device to determine that the first user identity is associated with the second user identity.

With reference to the fourth aspect, in some implementations of the fourth aspect, the first message further includes one or more of the following information: proxy paging indication information, proxy TAU indication information, and proxy switching indication information.

With reference to the fourth aspect, in some implementations of the fourth aspect, the second message further includes one or more of the following information: proxy paging indication information, proxy TAU indication information, and proxy switching indication information.

With reference to the fourth aspect, in some implementations of the fourth aspect, the processing unit is configured to determine, based on at least one of the following information, whether the first user identity is allowed to be associated with the second user identity: capability information of the first device, subscription information of the first user identity, and location information of the terminal device.

With reference to the fourth aspect, in some implementations of the fourth aspect, the transceiver unit is further configured to send a fifth message to the terminal device based on information about the first user identity, where the fifth message is used to indicate to allow the first user identity to be associated with the second user identity.

With reference to the fourth aspect, in some implementations of the fourth aspect, the transceiver unit is further configured to send first indication information to the terminal device, where the first indication information indicates whether the first device supports user identity association.

With reference to the fourth aspect, in some implementations of the fourth aspect, the transceiver unit is further configured to receive a sixth message from the terminal device, where the sixth message is sent by the terminal device by using the first user identity, the sixth message is used to indicate to request to remove the association between the first user identity and the second user identity, and the sixth message is further used to indicate the information about the second user identity.

With reference to the fourth aspect, in some implementations of the fourth aspect, the transceiver unit is further configured to send a seventh message to the second device based on the information about the second user identity, where the seventh message is used to indicate to remove the association between the first user identity and the second user identity.

With reference to the fourth aspect, in some implementations of the fourth aspect, the sixth message further includes one or more of the following information: proxy paging removal indication information, proxy TAU removal indication information, and proxy switching removal indication information.

With reference to the fourth aspect, in some implementations of the fourth aspect, the seventh message further includes one or more of the following information: proxy paging removal indication information, proxy TAU removal indication information, and proxy switching removal indication information.

According to a fifth aspect, a communications apparatus is provided, including a transceiver unit and a processing unit. The transceiver unit is configured to receive a second message from a first device, where the second message is sent by the first device based on a first message from a terminal device, the first message is sent by the terminal device by using a first user identity, the first message is used to indicate to request the first user identity to be associated with a second user identity, the first message is further used to indicate information about the second user identity, and the second message is used to indicate to request the first user identity to be associated with the second user identity. The transceiver unit is further configured to send a third message to the first device, where the third message is used by the first device to determine that the first user identity is associated with the second user identity, and the third message is further used to indicate information about the first user identity.

With reference to the fifth aspect, in some implementations of the fifth aspect, the first message further includes one or more of the following information: proxy paging indication information, proxy TAU indication information, and proxy switching indication information.

With reference to the fifth aspect, in some implementations of the fifth aspect, the second message further includes one or more of the following information: proxy paging indication information, proxy TAU indication information, and proxy switching indication information.

With reference to the fifth aspect, in some implementations of the fifth aspect, the transceiver unit is further configured to receive an eighth message from the terminal device, where the eighth message is sent by the terminal device by using the second user identity, the eighth message is used to indicate to request the first user identity to be associated with the second user identity, and the eighth message is further used to indicate the information about the first user identity.

With reference to the fifth aspect, in some implementations of the fifth aspect, the eighth message further includes one or more of the following information: proxy paging indication information, proxy TAU indication information, and proxy switching indication information.

With reference to the fifth aspect, in some implementations of the fifth aspect, the processing unit is configured to determine, based on at least one of the following information, whether the first user identity is allowed to be associated with the second user identity: capability information of a second device, subscription information of the second user identity, and location information of the terminal device.

With reference to the fifth aspect, in some implementations of the fifth aspect, the transceiver unit is further configured to send a ninth message to the terminal device, where the ninth message is used to indicate to allow the first user identity to be associated with the second user identity.

With reference to the fifth aspect, in some implementations of the fifth aspect, the transceiver unit is further configured to send a tenth message to the terminal device, where the tenth message is used to indicate whether the first user identity is allowed to be associated with the second user identity, and the tenth message is further used to indicate the information about the first user identity.

With reference to the fifth aspect, in some implementations of the fifth aspect, the tenth message further includes one or more of the following information: proxy paging indication information, proxy TAU indication information, and proxy switching indication information.

With reference to the fifth aspect, in some implementations of the fifth aspect, the transceiver unit is further configured to receive an eleventh message from the terminal device, where the eleventh message is sent by the terminal device by using the second user identity, and the eleventh message is used to indicate to allow the first user identity to be associated with the second user identity.

With reference to the fifth aspect, in some implementations of the fifth aspect, the transceiver unit is further configured to send second indication information to the terminal device, where the second indication information indicates whether the second device allows user identity association.

With reference to the fifth aspect, in some implementations of the fifth aspect, the processing unit is configured to determine, based on the second message and at least one of the following information, whether the first user identity is allowed to be associated with the second user identity: capability information of the second device, subscription information of the second user identity, and location information of the terminal device.

With reference to the fifth aspect, in some implementations of the fifth aspect, the processing unit is further configured to determine, based on the second message and whether the eighth message is received, whether the first user identity is allowed to be associated with the second user identity.

With reference to the fifth aspect, in some implementations of the fifth aspect, the transceiver unit is further configured to receive a seventh message from the first device, where the seventh message is sent by the first device based on a sixth message from the terminal device, the sixth message is sent by the terminal device by using the first user identity, the sixth message is used to indicate to request to remove the association between the first user identity and the second user identity, the sixth message is further used to indicate the information about the second user identity, and the seventh message is used to indicate to remove the association between the first user identity and the second user identity.

With reference to the fifth aspect, in some implementations of the fifth aspect, the sixth message further includes one or more of the following information: proxy paging removal indication information, proxy TAU removal indication information, and proxy switching removal indication information.

With reference to the fifth aspect, in some implementations of the fifth aspect, the seventh message further includes one or more of the following information: proxy paging removal indication information, proxy TAU removal indication information, and proxy switching removal indication information.

According to a sixth aspect, a communications apparatus is provided, including a transceiver unit and a processing unit. The transceiver unit is configured to send a first message to a first device by using a first user identity, where the first message is used to indicate to request the first user identity to be associated with a second user identity, and the first message is further used to indicate information about the second user identity. The transceiver unit is further configured to receive a fourth message from the first device by using the first user identity, where the fourth message is sent by the first device based on a third message, the third message is used by the first device to determine that the first user identity is associated with the second user identity, the third message is further used to indicate information about the first user identity, and the fourth message is used by a terminal device to determine that the first user identity is associated with the second user identity.

With reference to the sixth aspect, in some implementations of the sixth aspect, the first message further includes one or more of the following information: proxy paging indication information, proxy TAU indication information, and proxy switching indication information.

With reference to the sixth aspect, in some implementations of the sixth aspect, the transceiver unit is further configured to receive a fifth message from the first device by using the first user identity, where the fifth message is used to indicate to allow the first user identity to be associated with the second user identity.

With reference to the sixth aspect, in some implementations of the sixth aspect, the transceiver unit is further configured to send an eighth message to a second device by using the second user identity, where the eighth message is used to indicate to request the first user identity to be associated with the second user identity, and the eighth message includes or indicates the information about the first user identity.

With reference to the sixth aspect, in some implementations of the sixth aspect, the eighth message further includes one or more of the following information: proxy paging indication information, proxy TAU indication information, and proxy switching indication information.

With reference to the sixth aspect, in some implementations of the sixth aspect, the transceiver unit is further configured to receive a ninth message from the second device by using the second user identity, where the ninth message is used to indicate to allow the first user identity to be associated with the second user identity.

With reference to the sixth aspect, in some implementations of the sixth aspect, the transceiver unit is further configured to receive a tenth message from the second device by using the second user identity, where the tenth message is used to indicate whether the first user identity is allowed to be associated with the second user identity, and the tenth message includes or indicates the information about the first user identity.

With reference to the sixth aspect, in some implementations of the sixth aspect, the tenth message further includes one or more of the following information: proxy paging indication information, proxy TAU indication information, and proxy switching indication information.

With reference to the sixth aspect, in some implementations of the sixth aspect, the processing unit is configured to determine that the first user identity is allowed to be associated with the second user identity. The transceiver unit is further configured to send an eleventh message to the second device by using the second user identity, where the eleventh message is used to indicate to allow the first user identity to be associated with the second user identity.

With reference to the sixth aspect, in some implementations of the sixth aspect, the transceiver unit is further configured to send a sixth message to the first device by using the first user identity, where the sixth message is used to request to indicate to remove the association between the first user identity and the second user identity, and the sixth message is further used to indicate the information about the second user identity.

With reference to the sixth aspect, in some implementations of the sixth aspect, the sixth message further includes one or more of the following information: proxy paging removal indication information, proxy TAU removal indication information, and proxy switching removal indication information.

According to a seventh aspect, a communications apparatus is provided, including a processor. The processor is coupled to a memory, and may be configured to execute instructions or data in the memory, to implement the method according to any one of the first aspect and the possible implementations of the first aspect. The communications apparatus further includes the memory. The communications apparatus further includes a communications interface, and the processor is coupled to the communications interface.

In an implementation, the communications apparatus is a first device. When the communications apparatus is the first device, the communications interface may be a transceiver or an input/output interface.

In another implementation, the communications apparatus is a chip or a chip system configured in the first device. When the communications apparatus is the chip or the chip system configured in the first device, the communications interface may be an input/output interface.

The transceiver may be a transceiver circuit. The input/output interface may be an input/output circuit.

According to an eighth aspect, a communications apparatus is provided, including a processor. The processor is coupled to a memory, and may be configured to execute instructions or data in the memory, to implement the method according to any one of the second aspect and the possible implementations of the second aspect. The communications apparatus further includes the memory. The communications apparatus further includes a communications interface, and the processor is coupled to the communications interface.

In an implementation, the communications apparatus is a second device. When the communications apparatus is the second device, the communications interface may be a transceiver or an input/output interface.

In another implementation, the communications apparatus is a chip or a chip system configured in the second device. When the communications apparatus is the chip or the chip system configured in the second device, the communications interface may be an input/output interface.

The transceiver may be a transceiver circuit. The input/output interface may be an input/output circuit.

According to a ninth aspect, a communications apparatus is provided, including a processor. The processor is coupled to a memory, and may be configured to execute instructions or data in the memory, to implement the method according to any one of the third aspect and the possible implementations of the third aspect. The communications apparatus further includes the memory. The communications apparatus further includes a communications interface, and the processor is coupled to the communications interface.

In an implementation, the communications apparatus is a terminal device. When the communications apparatus is the terminal device, the communications interface may be a transceiver or an input/output interface.

In another implementation, the communications apparatus is a chip or a chip system configured in the terminal device. When the communications apparatus is the chip or the chip system configured in the terminal device, the communications interface may be an input/output interface.

The transceiver may be a transceiver circuit. The input/output interface may be an input/output circuit.

According to a tenth aspect, a processor is provided, including an input circuit, an output circuit, and a processing circuit. The processing circuit is configured to: receive a signal through the input circuit, and transmit a signal through the output circuit, so that the processor is enabled to perform the method according to any one of the first aspect to the third aspect and the possible implementations of the first aspect to the third aspect.

In a specific implementation process, the processor may be one or more chips, the input circuit may be an input pin, the output circuit may be an output pin, and the processing circuit may be a transistor, a gate circuit, a trigger, various logic circuits, or the like. A signal received and input by the input circuit may be received and input by, for example but not limited to, a receiver. A signal output by the output circuit may be output to, for example but not limited to, a transmitter and transmitted by the transmitter. The input circuit and the output circuit may be a same circuit, and the circuit is used as the input circuit and the output circuit at different moments. Specific implementations of the processor and various circuits are not limited in embodiments of this application.

According to an eleventh aspect, a processing apparatus is provided, including a processor and a memory. The processor is configured to: read instructions stored in the memory, and may receive a signal through a receiver, and transmit a signal through a transmitter, to perform the method according to any one of the first aspect to the third aspect and the possible implementations of the first aspect to the third aspect.

There are one or more processors and one or more memories.

The memory may be integrated into the processor, or the memory and the processor are disposed separately.

In a specific implementation process, the memory may be a non-transitory (non-transitory) memory, for example, a read-only memory (read-only memory, ROM). The memory and the processor may be integrated into a same chip, or may be separately disposed on different chips. A type of the memory and a manner of disposing the memory and the processor are not limited in embodiments of this application.

It should be understood that a related data exchange process such as sending indication information may be a process of outputting the indication information from the processor, and receiving capability information may be a process of receiving input capability information by the processor. Specifically, data output by the processor can be output to the transmitter, and input data received by the processor may be from the receiver. The transmitter and the receiver may be collectively referred to as a transceiver.

The processing apparatus according to the eleventh aspect may be one or more chips, or may be a chip system. The processor in the processing apparatus may be implemented by hardware, or may be implemented by software. When the hardware is used for implementation, the processor may be a logic circuit, an integrated circuit, or the like. When software is used for implementation, the processor may be a general-purpose processor, and is implemented by reading software code stored in the memory. The memory may be integrated into the processor, or may be located outside the processor and exist independently.

According to a twelfth aspect, a computer program product is provided. The computer program product includes a computer program (also referred to as code or instructions). When the computer program is run, the method according to any one of the first aspect to the third aspect and the possible implementations of the first aspect to the third aspect is performed.

According to a thirteenth aspect, a computer-readable storage medium is provided. The computer-readable storage medium stores a computer program (also referred to as code or instructions). When the computer program is run on a computer, the method according to any one of the first aspect to the third aspect and the possible implementations of the first aspect to the third aspect is performed.

According to a fourteenth aspect, a communications system is provided, including the foregoing terminal device and/or the foregoing first device and second device.

### BRIEF DESCRIPTION OF DRAWINGS

FIG. 1 is a schematic diagram of a communications system to which a method according to an embodiment of this application is applicable;
FIG. 2 to FIG. 5 are schematic flowcharts of user identity association methods according to embodiments of this application;
FIG. 6 is a schematic block diagram of a communications apparatus according to an embodiment of this application; and
FIG. 7 is a schematic block diagram of a communications device according to an embodiment of this application.

### DESCRIPTION OF EMBODIMENTS

The following describes implementations of embodiments in detail with reference to accompanying drawings.

Technical solutions in embodiments of this application may be applied to various communications systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communications system, a 5th generation (5th generation, 5G) system, a future evolved network or new radio (new radio, NR) system, and a satellite communications system.

It should be understood that specific structures of execution bodies of methods according to embodiments of this application are not particularly limited in embodiments of this application, provided that a program that records code of the methods provided in embodiments of this application can be run to perform communication based on the methods according to embodiments of this application.

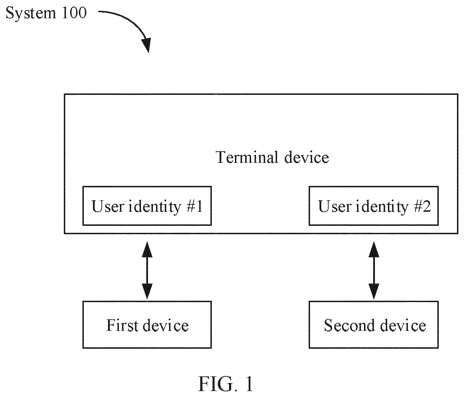

For ease of understanding of embodiments of this application, an application scenario to which embodiments of this application are applicable is first described in detail with reference to FIG. 1.

FIG. 1 shows a network communications system to which a method according to an embodiment of this application is applicable. As shown in FIG. 1, the communications system 100 may include a terminal device, and the terminal device may include a user identity #1 and a user identity #2. The terminal device may register with a network by using the user identity #1 or the user identity #2. The user identity #1 may be any one of the following: a universal subscriber identity module (universal subscriber identity module, USIM) card, a SIM card, and an embedded subscriber identity module (embedded subscriber identity module, eSIM) card. This is not limited in embodiments of this application. The user identity #2 may be any one of the following: a USIM card, a SIM card, and an eSIM card. This is not limited in embodiments of this application.

The communications system 100 may further include a first device and a second device. The first device serves the user identity #1, and the second device serves the user identity #2. Specific forms of the first device and the second device are not limited in embodiments of this application. For example, in a 4th generation (4th generation, 4G) system, both the first device and the second device may be mobility management entities (mobility management entity, MME). For another example, in a 5G system, both the first device and the second device may be access and mobility management functions (access and mobility management function, AMF). For still another example, the first device may be an MME, and the second device may be an AMF; or the first device is an AMF, and the second device is an MME.

When the user identity #1 and the user identity #2 belong to a same operator, the communications system may be further optimized. For example, the user identity #1 may act as proxy for the user identity #2 to perform paging, switching, and TAU update, or the user identity #2 may act as proxy for the user identity #1 to perform paging, switching, and TAU update. This saves network resources and reduces power consumption of the terminal device. However, the premise of the foregoing optimization is that a network to which the terminal device belongs needs to know that two user identities are included in one terminal device. That the network needs to know that the two user identities are included in the one terminal device may also be understood as that the network associates the two user identities with the one terminal device.

In view of this, embodiments of this application provide a user identity association method, to associate two user identities with one terminal device.

The following describes in detail the user identity association method provided in embodiments of this application with reference to the accompanying drawings. For ease of description, embodiments of this application are described by using an example in which both the first device and the second device are AMFs. However, this should not constitute a limitation on this application. An AMF #1 corresponds to the first device, and an AMF #2 corresponds to the second device.

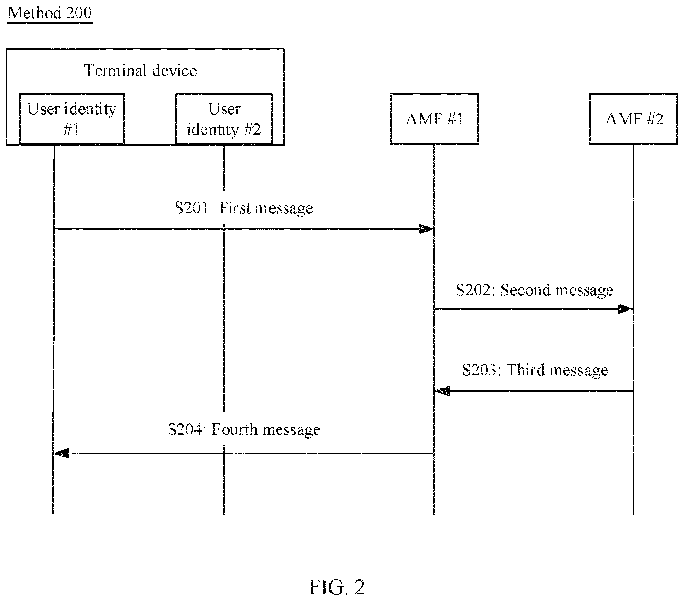

FIG. 2 is a schematic flowchart of a user identity association method according to an embodiment of this application. The method 200 shown in FIG. 2 may be applied to the communications system shown in FIG. 1, and the method 200 may be performed by the terminal device, the first device, and the second device shown in FIG. 1. As shown in FIG. 2, the method 200 may include S201 to S204. The following describes each step in detail.

S201: The terminal device sends a first message to an AMF #1 (an example of the first device).

The terminal device sends the first message to the AMF #1 by using a user identity #1 (an example of a first user identity). The first message is used to indicate to request the user identity #1 to be associated with a user identity #2 (an example of a second user identity), and the first message is further used to indicate or includes information about the user identity #2.

A specific form of the information about the user identity #2 is not limited in this embodiment of this application. For example, the information about the user identity #2 may be a globally unique temporary identity (globally unique temporary identity, GUTI) (for example, which may be specifically a 5G GUTI in 5G).

Optionally, the first message may further include one or more of the following information: proxy paging indication information, proxy TAU indication information, and proxy switching indication information.

The proxy paging indication information indicates to request the user identity #1 to act as proxy for the user identity #2 to perform paging. That the user identity #1 acts as proxy for the user identity #2 to perform paging may be understood as that, when a network needs to page the user identity #2, the network sends the paging of the user identity #2 to the terminal device by using a radio access technology (radio access technology, RAT) for the user identity #1. Correspondingly, the terminal device listens to the paging of the user identity #2 by using the RAT for the user identity #1.

The proxy TAU indication information indicates to request the user identity #1 to act as proxy for the user identity #2 to perform TAU. That the user identity #1 acts as proxy for the user identity #2 to perform TAU may be understood as that the terminal device completes TAU of the user identity #2 through interaction between the user identity #1 and the network.

The proxy switching indication information indicates to request the user identity #1 to act as proxy for the user identity #2 to perform switching. That the user identity #1 acts as proxy for the user identity #2 to perform switching may be understood as that the terminal device completes switching of the user identity #2 through interaction between the user identity #1 and the network.

When the first message includes one or more of the foregoing information, that the first message is used to indicate to request the user identity #1 to be associated with the user identity #2 may be understood as that the first message is not only used to indicate to request the user identity #1 to be associated with the user identity #2, but also used to indicate to request the user identity #1 to act as proxy for the user identity #2 to perform a service. For example, if the first message includes the proxy paging indication information, the first message is not only used to indicate to request the user identity #1 to be associated with the user identity #2, but also used to indicate to request the user identity #1 to act as proxy for the user identity #2 to perform a paging service.

Optionally, the first message may be one of the following messages: a proxy paging request message, a proxy TAU request message, and a proxy switching request message. The proxy paging request message is used to request the user identity #1 to act as proxy for the user identity #2 to perform paging, the proxy TAU request message is used to request the user identity #1 to act as proxy for the user identity #2 to perform TAU, and the proxy switching request message is used to request the user identity #1 to act as proxy for the user identity #2 to perform switching.

In this case, that the first message is used to indicate to request the user identity #1 to be associated with the user identity #2 may be understood as that the first message is used to indicate to request the user identity #1 to act as proxy for the user identity #2 to perform a service.

Optionally, the first message may further include third indication information or fourth indication information. The third indication information indicates to request the user identity #1 to act as proxy for the user identity #2 to perform a service. The fourth indication information indicates to request the user identity #2 to act as proxy for the user identity #1 to perform a service.

S202: The AMF #1 sends a second message to an AMF #2 (an example of the second AMF).

The second message is used to indicate to request the user identity #1 to be associated with the user identity #2.

Optionally, the second message may further include one or more of the following information: proxy paging indication information, proxy TAU indication information, and proxy switching indication information.

It may be understood that, because the user identity #1 and the user identity #2 belong to a same operator, the AMF #1 serving the user identity #1 and the AMF #2 serving the user identity #2 may communicate with each other.

As described above, the first message received by the AMF #1 from the terminal device is further used to indicate the information about the user identity #2, and the AMF #1 may find, based on the information about the user identity #2, the AMF #2 serving the user identity #2. Further, the AMF #1 sends the second message to the AMF #2. The second message may be the same as the first message. For example, the AMF #1 may forward the first message to the AMF #2. Alternatively, the second message may be different from the first message. For example, the AMF #1 decapsulates the received first message, to obtain specific content in the first message. Then, the AMF #1 encapsulates the obtained specific content based on a communications protocol between the AMF #1 and the AMF #2, to generate the second message. Next, the AMF #1 sends the second message to the AMF #2.

For another example, it is assumed that the first message further includes one or more of the following information: proxy paging indication information, proxy TAU indication information, and proxy switching indication information. In this case, after receiving the first message, the AMF #1 may first send the second message that does not include the foregoing information to the AMF #2. After the AMF #2 determines that the user identity #1 is allowed to be associated with the user identity #2, the AMF #1 sends the foregoing information to the AMF #2.

That the first message is the same as the second message is used as an example. If the first message is used to indicate to request the user identity #1 to be associated with the user identity #2, correspondingly, the second message is also used to indicate to request the user identity #1 to be associated with the user identity #2. If the first message is used to indicate to request the user identity #1 to be associated with the user identity #2 and request the user identity #1 to act as proxy for the user identity #2 to perform a service, correspondingly, the second message is also used to indicate to request the user identity #1 to be associated with the user identity #2 and request the user identity #1 to act as proxy for the user identity #2 to perform a service. If the first message is used to indicate to request the user identity #1 to act as proxy for the user identity #2 to perform a service, correspondingly, the second message is also used to indicate to request the user identity #1 to act as proxy for the user identity #2 to perform a service.

S203: The AMF #2 sends a third message to the AMF #1.

The third message is used by the AMF #1 to determine that the user identity #1 is associated with the user identity #2, that is, the AMF #1 may determine, based on the third message, that the user identity #1 is associated with the user identity #2.

The third message is further used to indicate or includes information about the user identity #1.

S204: The AMF #1 sends a fourth message to the terminal device.

The AMF #1 sends the fourth message to the terminal device based on the third message. Correspondingly, the terminal device receives the fourth message by using the user identity #1. The fourth message is used by the terminal device to determine that the user identity #1 is associated with the user identity #2, that is, the terminal device may determine, based on the fourth message, that the user identity #1 is associated with the user identity #2. The fourth message may be the same as or different from the third message. For example, the AMF #1 may delete the information about the user identity #1 that is carried in the third message, to generate the fourth message, and then send the fourth message to the AMF #2.

It may be understood that, this embodiment of this application is merely described by using an example in which the first message and the second message are used to request the user identity #1 to act as proxy for the user identity #2 to perform a service. This should not constitute a limitation on this application. The first message and the second message may be further used to request the user identity #2 to act as proxy for the user identity #1 to perform a service.

In this embodiment of this application, by using the user identity #1 in the terminal device, the AMF #1 serving the user identity #1 may send the second message to the AMF #2 serving the user identity #2, and when the AMF #2 allows user identity association, the AMF #2 may allow the user identity #1 to be associated with the user identity #2, to establish the association between the user identity #1 and the user identity #2. In addition, the second message may further include proxy paging indication information, proxy TAU indication information, and proxy switching indication information. The AMF #2 may allow, based on the second message, the user identity #1 to act as proxy for the user identity #2 to perform a related service. In this case, the user identity #2 may be disabled. Therefore, power consumption of the terminal device can be reduced, and network resources can be saved.

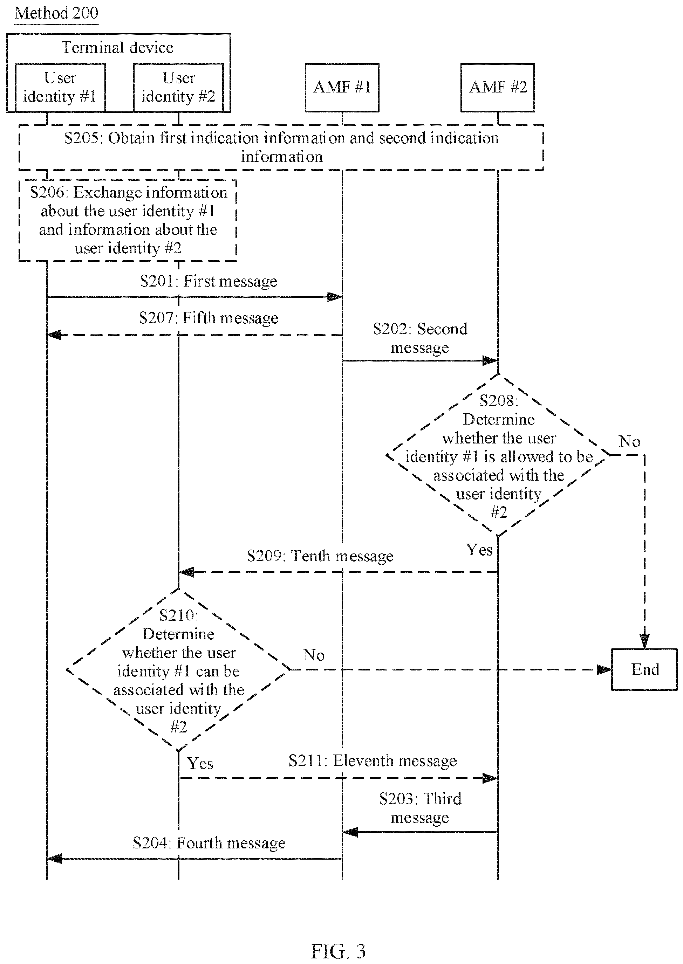

As shown in FIG. 3, the method 200 may further include S205 to S211. The following describes each step in detail.

Optionally, before S201, the method 200 may further include S205 and S206.

S205: The terminal device obtains first indication information and second indication information.

The first indication information indicates that the AMF #1 supports user identity association, and the second indication information indicates that the AMF #2 supports user identity association.

A specific manner in which the terminal device obtains the first indication information and the second indication information is not limited in this embodiment of this application. For example, in a process in which the user identity #1 in the terminal device registers with a core network, a registration accept (registration accept) message received by the terminal device from the AMF #1 may include the first indication information. For example, in a process in which the user identity #2 in the terminal device registers with the core network, a registration accept message received by the terminal device from the AMF #2 may include the second indication information.

S206: Exchange the information about the user identity #1 and the information about the user identity #2.

That is, the user identity #1 and the user identity #2 obtain the information about each other. For a manner in which the user identity #1 and the user identity #2 obtain the information about each other, refer to the conventional technology. For brevity, details are not described herein.

Specific forms of the information about the user identity #1 and the information about the user identity #2 are not limited in this embodiment of this application. For example, both the information about the user identity #1 and the information about the user identity #2 may be 5G-GUTIs.

Optionally, before S202, the method 200 may further include S207.

S207: The AMF #1 sends a fifth message to the terminal device.

The fifth message is used to indicate to allow the user identity #1 to be associated with the user identity #2.

Before the AMF #1 sends the fifth message to the terminal device, the AMF #1 may determine whether the user identity #1 is allowed to be associated with the user identity #2.

A method for determining, by the AMF #1, whether the user identity #1 is allowed to be associated with the user identity #2 is not limited in this embodiment of this application. After receiving the first message, the AMF #1 may determine, based on at least one of the following information, whether the user identity #1 is allowed to be associated with the user identity #2: capability information of the AMF #1, subscription information of the user identity #1, and location information of the terminal device.

The capability information of the AMF #1 indicates whether the AMF #1 supports user identity association. If the AMF #1 determines, based on the capability information of the AMF #1, whether the user identity #1 is allowed to be associated with the user identity #2, when the AMF #1 supports user identity association, the AMF #1 determines that the user identity #1 can be allowed to be associated with the user identity #2, or otherwise, the AMF #1 determines that the user identity #1 is not allowed to be associated with the user identity #2.

The subscription information of the user identity #1 indicates whether the subscription information of the user identity #1 includes information indicating whether user identity association is supported. If the AMF #1 determines, based on the subscription information of the user identity #1, whether the user identity #1 is allowed to be associated with the user identity #2, when the subscription information of the user identity #1 includes the information indicating whether user identity association is supported, the AMF #1 determines that the user identity #1 is allowed to be associated with the user identity #2, or otherwise, the AMF #1 determines that the user identity #1 is not allowed to be associated with the user identity #2.

The location information of the terminal device indicates that the user identity #1 is allowed to be associated with the user identity #2 when the terminal device is at an agreed location. If the AMF #1 determines, based on the location information of the terminal device, whether the user identity #1 is allowed to be associated with the user identity #2, when the terminal device is at the agreed location, the AMF #1 determines that the user identity #1 can be allowed to be associated with the user identity #2, or otherwise, the user identity #1 is not allowed to be associated with the user identity #2.

It may be understood that, if the AMF #1 determines, based on two or three of the foregoing information, whether the user identity #1 is allowed to be associated with the user identity #2, when each piece of information meets the foregoing condition, the AMF #1 determines that the user identity #1 is allowed to be associated with the user identity #2, or otherwise, the user identity #1 is not allowed to be associated with the user identity #2.

Optionally, before S203, the method 200 may further include S208 to S211.

S208: The AMF #2 determines whether the user identity #1 is allowed to be associated with the user identity #2.

As described above, if the second message is used to indicate to request the user identity #1 to be associated with the user identity #2, the AMF #2 determines whether the user identity #1 is allowed to be associated with the user identity #2. If the second message is used to indicate to request the user identity #1 to be associated with the user identity #2 and request the user identity #1 to act as proxy for the user identity #2 to perform a service, the AMF #2 determines whether the user identity #1 is allowed to be associated with the user identity #2 and whether the user identity #1 is allowed to act as proxy for the user identity #2 to perform a service. If the second message is used to indicate to request the user identity #1 to act as proxy for the user identity #2 to perform a service, the AMF #2 determines whether the user identity #1 is allowed to act as proxy for the user identity #2 to perform a service.

A specific method for determining, by the AMF #2, whether the user identity #1 is allowed to be associated with the user identity #2 is not limited in this embodiment of this application.

In an implementation, the AMF #2 may determine, based on the second message and at least one of the following information, whether the user identity #1 is allowed to be associated with the user identity #2: capability information of the AMF #2, subscription information of the user identity #2, and location information of the terminal device.

The capability information of the AMF #2 indicates whether the AMF #2 supports user identity association. If the AMF #2 determines, based on the second message and the capability information of the AMF #2, whether the user identity #1 is allowed to be associated with the user identity #2, when the AMF #2 supports user identity association, the AMF #2 determines that the user identity #1 can be allowed to be associated with the user identity #2, or otherwise, the AMF #2 determines that the user identity #1 is not allowed to be associated with the user identity #2.

The subscription information of the user identity #2 indicates whether the subscription information of the user identity #2 includes information indicating whether user identity association is supported. If the AMF #2 determines, based on the second message and the subscription information of the user identity #2, whether the user identity #1 is allowed to be associated with the user identity #2, when the subscription information of the user identity #2 includes the information indicating whether user identity association is supported, the AMF #2 determines that the user identity #1 is allowed to be associated with the user identity #2, or otherwise, the AMF #2 determines that the user identity #1 is not allowed to be associated with the user identity #2.

The location information of the terminal device indicates that the user identity #1 is allowed to be associated with the user identity #2 when the terminal device is at an agreed location. If the AMF #2 determines, based on the second message and the location information of the terminal device, whether the user identity #1 is allowed to be associated with the user identity #2, when the terminal device is at the agreed location, the AMF #2 determines that the user identity #1 can be allowed to be associated with the user identity #2, or otherwise, the user identity #1 is not allowed to be associated with the user identity #2.

It may be understood that, if the AMF #2 determines, based on the second message and two or three of the foregoing information, whether the user identity #1 is allowed to be associated with the user identity #2, when each piece of information meets the foregoing condition, the AMF #2 determines that the user identity #1 is allowed to be associated with the user identity #2, or otherwise, the user identity #1 is not allowed to be associated with the user identity #2.

In another implementation, the AMF #2 determines, based on whether an eighth message is received, whether the user identity #1 is allowed to be associated with the user identity #2. The eighth message is sent by the terminal device by using the user identity #2, the eighth message is used to indicate to request the user identity #1 to be associated with the user identity #2, and the eighth message is further used to indicate the information about the user identity #1. This implementation is described below with reference to another embodiment. Details are not described herein.

When the second message is used to indicate to request the user identity #1 to be associated with the user identity #2, if the AMF #2 determines that the user identity #1 is allowed to be associated with the user identity #2, it may be understood that the AMF #2 only allows the user identity #1 to be associated with the user identity #2, or it may be understood that the AMF #2 not only allows the user identity #1 to be associated with the user identity #2, but also allows the user identity #1 to act as proxy for the user identity #2 to perform a service.

When the second message is used to indicate to request the user identity #1 to be associated with the user identity #2 and request the user identity #1 to act as proxy for the user identity #2 to perform a service, the AMF #2 may determine, after determining whether the user identity #1 is allowed to be associated with the user identity #2, whether the user identity #1 is allowed to act as proxy for the user identity #2 to perform a service; or the AMF #2 may determine, when determining whether the user identity #1 is allowed to be associated with the user identity #2, whether the user identity #1 is allowed to act as proxy for the user identity #2 to perform a service. If the AMF #2 first determines whether the user identity #1 is allowed to be associated with the user identity #2, when the AMF #2 determines that the user identity #1 is not allowed to be associated with the user identity #2, the AMF #2 may determine, without performing a determining process, that the user identity #1 is not allowed to act as proxy for the user identity #2 to perform a service; or when the AMF #2 determines that the user identity #1 is allowed to be associated with the user identity #2, the AMF #2 may determine, without performing a determining process, that the user identity #1 is allowed to act as proxy for the user identity #2 to perform a service.

A method for determining, by the AMF #2, whether the user identity #1 is allowed to act as proxy for the user identity #2 to perform a service is not limited in this embodiment of this application.

In an implementation, the AMF #2 determines, based on at least one of the following information, whether the user identity #1 is allowed to act as proxy for the user identity #2 to perform a service: capability information of the AMF #2, subscription information of the user identity #2, and location information of the terminal device.

In another implementation, the AMF #2 determines, based on whether the user identity #1 is associated with the user identity #2, whether the user identity #1 is allowed to act as proxy for the user identity #2 to perform a service. If the user identity #1 is not associated with the user identity #2, the user identity #1 is not allowed to act as proxy for the user identity #2 to perform a service. If the user identity #1 is associated with the user identity #2, the user identity #1 is allowed to act as proxy for the user identity #2 to perform a service.

In still another implementation, the AMF #2 determines, based on whether the eighth message is received, whether the user identity #1 is allowed to act as proxy for the user identity #2 to perform a service. This implementation is described below with reference to another embodiment. Details are not described herein.

S209: The AMF #2 sends a tenth message to the terminal device.

Correspondingly, the terminal device receives the tenth message by using the user identity #2. The tenth message is used to indicate whether the user identity #1 is allowed to be associated with the user identity #2, and the tenth message is further used to indicate the information about the user identity #1, or the tenth message is further used to indicate information about the user identity #1.

Optionally, the tenth message further includes one or more of the following information: proxy paging indication information, proxy TAU indication information, and proxy switching indication information.

The tenth message may be the same as or different from the second message. For example, the AMF #2 decapsulates the received second message, to obtain specific content in the second message. Then, the AMF #2 encapsulates the obtained specific content based on a communications protocol between the AMF #2 and the terminal device, to generate the tenth message. Next, the AMF #2 sends the tenth message to the terminal device.

When the AMF #2 determines that the user identity #1 is allowed to be associated with the user identity #2, the AMF #2 sends the tenth message to the user identity #2.

S210: The user identity #2 determines whether the user identity #1 can be associated with the user identity #2.

A method for determining, by the user identity #2, whether the user identity #1 can be associated with the user identity #2 is not limited in this embodiment of this application. For example, the user identity #2 may determine, based on the subscription information of the user identity #2, whether the user identity #1 can be associated with the user identity #2. The subscription information of the user identity #2 indicates whether the subscription information of the user identity #2 includes information indicating whether multi-user identity association is supported. If the subscription information of the user identity #2 includes the information indicating whether multi-user identity association is supported, the user identity #2 determines that the user identity #1 can be associated with the user identity #2, or otherwise, the user identity #2 determines that the user identity #1 cannot be associated with the user identity #2.

If the user identity #2 determines that the user identity #1 cannot be associated with the user identity #2, the method 200 ends. If the user identity #2 determines that the user identity #1 can be associated with the user identity #2, S211 is performed.

S211: The terminal device sends an eleventh message to the AMF #2.

The terminal device sends the eleventh message to the AMF #2 by using the user identity #2. The eleventh message is used to indicate to allow the user identity #1 to be associated with the user identity #2.

When the user identity #2 determines that the user identity #1 cannot be associated with the user identity #2, the terminal device does not send the eleventh message. Correspondingly, if the AMF #2 does not receive the eleventh message, the AMF #2 determines that the user identity #1 cannot be associated with the user identity #2.

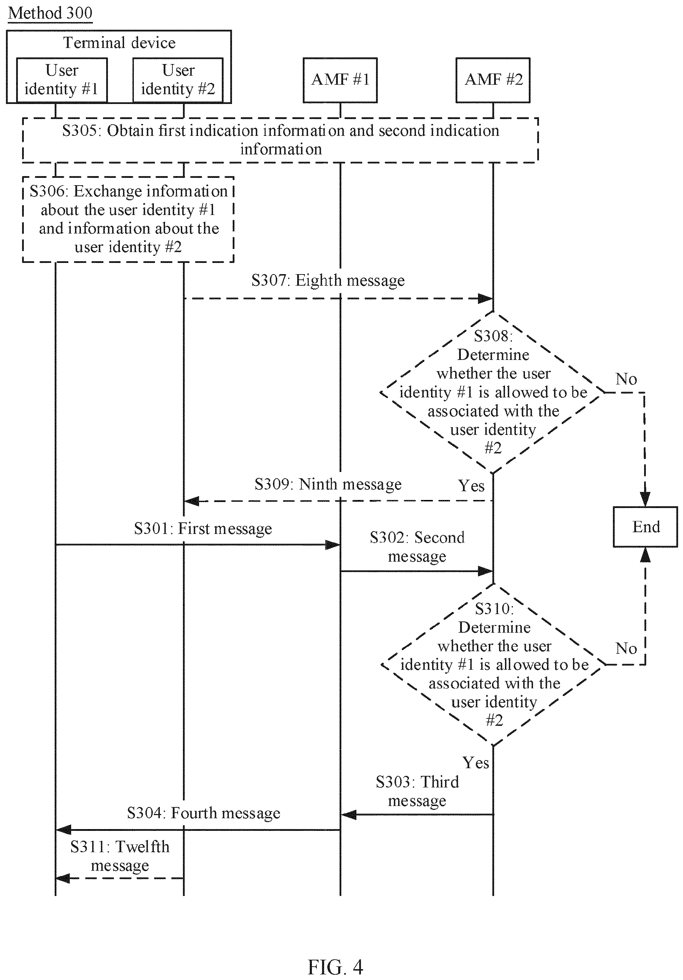

FIG. 4 is a schematic flowchart of a user identity association method according to another embodiment of this application. In the embodiment shown in FIG. 4, the example in which the AMF #2 determines, based on whether the eighth message is received, whether the user identity #1 is allowed to be associated with the user identity #2 mentioned in S208 is described in more detail.

As shown in FIG. 4, the method 300 may include S301 to S311. S301 to S306 are the same as S201 to S206 in the method 200. For brevity, details are not described herein again. The following describes in detail other steps different from those in the method 200.

S307: The terminal device sends an eighth message to the AMF #2 (an example of the second device).

The terminal device sends the eighth message to the AMF #2 by using a user identity #2 (an example of a second user identity), the eighth message is used to indicate to request the user identity #2 to be associated with a user identity #1 (an example of a second user identity), and the eighth message is further used to indicate or includes information about the user identity #1.

Optionally, the eighth message may further include one or more of the following information: proxy paging indication information, proxy TAU indication information, and proxy switching indication information. Similar to the function of the first message, when the eighth message includes the foregoing information, the eighth message is further used to indicate to request the user identity #1 to act as proxy for the user identity #2 to perform a service.

Optionally, the eighth message may be one of the following messages: a proxy paging request message, a proxy TAU request message, and a proxy switching request message. Similar to the function of the first message, when the eighth message is the foregoing message, the eighth message is used to indicate to request the user identity #1 to act as proxy for the user identity #2 to perform a service.

Optionally, the eighth message may further include third indication information or fourth indication information. The third indication information indicates to request the user identity #1 to act as proxy for the user identity #2 to perform a service. The fourth indication information indicates to request the user identity #2 to act as proxy for the user identity #1 to perform a service.

S308: The AMF #2 determines whether the user identity #1 is allowed to be associated with the user identity #2.

After receiving the eighth message, the AMF #2 may determine, based on at least one of the following information, whether the user identity #1 is allowed to be associated with the user identity #2: capability information of the AMF #2, subscription information of the user identity #2, and location information of the terminal device.

For a detailed determining method, refer to the description in S208. For brevity, details are not described herein again.

S309: The AMF #2 sends a ninth message to the terminal device.

Correspondingly, the terminal device receives the ninth message by using the user identity #2. The ninth message is used to indicate the AMF #2 to determine that the user identity #1 is allowed to be associated with the user identity #2.

S310: The AMF #2 determines whether the user identity #1 is allowed to be associated with the user identity #2.

The AMF #2 determines, based on whether the eighth message is received from the terminal device, whether the user identity #1 is allowed to be associated with the user identity #2.

For example, if the second message is used to indicate to request the user identity #1 to be associated with the user identity #2, when the AMF #2 receives the eighth message from the terminal device, and the eighth message is also used to indicate to request the user identity #1 to be associated with the user identity #2, the AMF #2 determines that the user identity #1 is allowed to be associated with the user identity #2.

For another example, if the second message is used to indicate to request the user identity #1 to be associated with the user identity #2 and request the user identity #1 to act as proxy for the user identity #2 to perform a service, when the AMF #2 receives the eighth message from the terminal device, and the eighth message is also used to indicate to request the user identity #1 to be associated with the user identity #2 and request the user identity #1 to act as proxy for the user identity #2 to perform a service, the AMF #2 allows the user identity #1 to be associated with the user identity #2 and allows the user identity #1 to act as proxy for the user identity #2 to perform a service; when the eighth message is used to indicate to request the user identity #1 to be associated with the user identity #2, the AMF #2 first determines that the user identity #1 is allowed to be associated with the user identity #2; or when the eighth message is used to indicate to request the user identity #1 to be associated with the user identity #2 and request the user identity #2 to act as proxy for the user identity #1 to perform a service, the AMF #2 first determines that the user identity #1 is allowed to be associated with the user identity #2, and then determines a sequence of receiving the second message and the eighth message. If the second message is first received, the AMF #2 determines that the user identity #1 is allowed to act as proxy for the user identity #2 to perform a service, or if the eighth message is first received, the AMF #2 determines that the user identity #2 is allowed to act as proxy for the user identity #1 to perform a service.

For still another example, if the second message is used to indicate to request the user identity #1 to act as proxy for the user identity #2 to perform a service, when the AMF #2 receives the eighth message from the terminal device and the eighth message is also used to indicate to request the user identity #1 to act as proxy for the user identity #2 to perform a service, the AMF #2 determines that the user identity #1 is allowed to act as proxy for the user identity #2 to perform a service; or when the eighth message is used to request the user identity #2 to act as proxy for the user identity #1 to perform a service, the AMF #2 determines a sequence of receiving the second message and the eighth message. If the second message is first received, the AMF #2 determines that the user identity #1 is allowed to act as proxy for the user identity #2 to perform a service, or if the eighth message is first received, the AMF #2 determines that the user identity #2 is allowed to act as proxy for the user identity #1 to perform a service.

S311: The user identity #2 sends a twelfth message to the user identity #1.

The twelfth message is used by the user identity 1 to determine that the user identity #1 is allowed to be associated with the user identity #2, that is, the user identity #1 determines, based on the twelfth message, that the user identity #1 is associated with the user identity #2.

In this embodiment of this application, by using the user identity #1 in the terminal device, the AMF #1 serving the user identity #1 may send the second message to the AMF #2 serving the user identity #2, and when the AMF #2 receives the eighth message from the terminal device, the AMF #2 may allow the user identity #1 to be associated with the user identity #2, to establish the association between the user identity #1 and the user identity #2. In addition, the second message may further include proxy paging indication information, proxy TAU indication information, and proxy switching indication information. The AMF #2 may allow, based on the second message, the user identity #1 to act as proxy for the user identity #2 to perform a related service. In this case, the user identity #2 may be disabled. Therefore, power consumption of the terminal device can be reduced, and network resources can be saved.

After the association is established between the user identity #1 and the user identity #2, if the terminal device determines that both the user identity #1 and the user identity #2 can work, the association between the user identity #1 and the user identity #2 may be removed. For example, if the terminal device determines that both the user identity #1 and the user identity #2 can normally receive paging, the terminal device determines to remove the user identity #1 from acting as proxy for the user identity #2 to perform paging or remove the user identity #2 from acting as proxy for the user identity #1 to perform paging. For another example, if the terminal device determines that both the user identity #1 and the user identity #2 can normally perform TAU, the terminal device determines to remove the user identity #1 from acting as proxy for the user identity #2 to perform TAU or remove the user identity #2 from acting as proxy for the user identity #1 to perform TAU. For still another example, if the terminal device determines that both the user identity #1 and the user identity #2 can normally perform switching, the terminal device determines to remove the user identity #1 from acting as proxy for the user identity #2 to perform switching or remove the user identity #2 from acting as proxy for the user identity #1 to perform switching.

Alternatively, if the terminal device determines that the user identity #1 or the user identity #2 is not enabled, the terminal device may remove the association between the user identity #1 and the user identity #2.

Alternatively, if the terminal device determines that power consumption does not need to be reduced, the terminal device may remove the association between the user identity #1 and the user identity #2. For example, when being charged, the terminal device may determine that the association between the user identity #1 and the user identity #2 can be removed.

Alternatively, if the terminal device determines that signal quality of a card that is acting as proxy for the other card to perform a service is relatively poor, the terminal device may remove the proxy relationship between the two cards. For example, if the user identity #1 is acting as proxy for the user identity #2 to perform a service, when the terminal device determines that signal quality of the user identity #1 is poor, the terminal device determines to remove the user identity #1 from acting as proxy for the user identity #2 to perform a service.

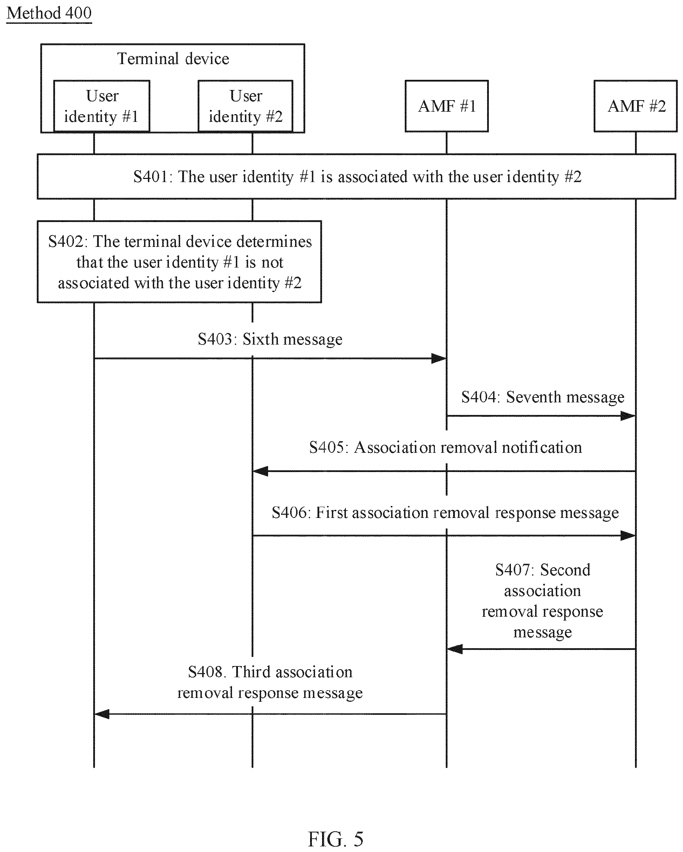

With reference to FIG. 5, the following describes in detail a method for removing an association between a user identity #1 and a user identity #2 according to an embodiment of this application. As shown in FIG. 5, the method 400 includes S401 to S408. The following describes each step in detail.

S401: The user identity #1 (an example of a first user identity) is associated with the user identity #2 (an example of a second user identity).

That the user identity #1 is associated with the user identity #2 may be understood as that the user identity #1 is associated with the user identity #2, the user identity #1 is associated with the user identity #2 and the user identity #1 acts as proxy for the user identity #2 to perform a service, or the user identity #1 is associated with the user identity #2 and the user identity #2 acts as proxy for the user identity #1 to perform a service.

S402: A terminal device determines that the user identity #1 is not associated with the user identity #2.

The basis for determining, by the terminal device, that the user identity #1 does not need to be associated with the user identity #2 is described above. For brevity, details are not described herein again.

S403: The terminal device sends a sixth message to an AMF #1 (an example of a first device).

The terminal device sends the sixth message to the AMF #1 by using the user identity #1. The sixth message is used to indicate to request to remove the association between the user identity #1 and the user identity #2, and the sixth message is further used to indicate or includes information about the user identity #2.

Optionally, the sixth message may further include one or more of the following information: proxy paging removal indication information, proxy TAU removal indication information, and proxy switching removal indication information.

Content in the sixth message may be determined based on the association between the user identity #1 and the user identity #2. For example, if the user identity #1 is associated with the user identity #2, and the user identity #1 acts as proxy for the user identity #2 to perform paging, the sixth message may include the proxy paging removal indication information; or if the user identity #1 is associated with the user identity #2, and the user identity #1 acts as proxy for the user identity #2 to perform TAU and switching, the sixth message may include the proxy TAU removal indication information and the proxy switching removal indication information.

S404: The AMF #1 sends a seventh message to an AMF #2 (an example of a second device).

The seventh message is used to indicate to remove the association between the user identity #1 and the user identity #2, and the seventh message may further include one or more of the following information: proxy paging removal indication information, proxy TAU removal indication information, and proxy switching removal indication information.

As described above, the sixth message received by the AMF #1 from the terminal device includes the information about the user identity #2, and the AMF #1 may find, based on the information about the user identity #2, the AMF #2 serving the user identity #2. Further, the AMF #1 sends the seventh message to the AMF #2. The seventh message may be the same as the sixth message. For example, the AMF #1 may forward the sixth message to the AMF #2. Alternatively, the seventh message may be different from the sixth message. For example, the AMF #1 decapsulates the received sixth message, to obtain specific content in the sixth message. Then, the AMF #1 encapsulates the obtained specific content based on a communications protocol between the AMF #1 and the AMF #2, to generate the seventh message. Next, the AMF #1 sends the seventh message to the AMF #2.

Optionally, the seventh message may be used to indicate information about the user identity #1 and the information about the user identity #2.

S405: The AMF #2 sends an association removal notification to the terminal device.

Correspondingly, the terminal device receives the association removal notification by using the user identity #2. The association removal notification is used to notify the user identity #2 that the association between the user identity #2 and the user identity #1 is removed.

Optionally, the association removal notification may be the same as the seventh message.

Optionally, the association removal notification may be used to indicate the information about the user identity #1.

S406: The terminal device sends a first association removal response message to the AMF #2.

The terminal device sends the first association removal response message to the AMF #2 by using the user identity #2. The first association removal response message is used to determine to remove the association between the user identity #1 and the user identity #2.

Optionally, the first association removal response message may be the same as the seventh message.

S407: The AMF #2 sends a second association removal response message to the AMF #1.

The second association removal response message is used to determine to remove the association between the user identity #1 and the user identity #2.

Optionally, the second association removal response message may be the same as the first association removal response message.

S408: The AMF #1 sends a third association removal response message to the terminal device.

Correspondingly, the terminal device receives the third association removal response message by using the user identity #1. The third association removal response message is used to determine to remove the association between the user identity #1 and the user identity #2.

Optionally, the third association removal response message may be the same as the first association removal response message.

It should be understood that, in the method 400, S405 and S406 may be performed before S407 and S408, or S407 and S408 may be performed before S405 and S406. This is not limited in this embodiment of this application.

It should be further understood that this embodiment of this application is merely described by using an example in which the terminal device sends the sixth message by using the user identity #1. This should not constitute a limitation on this application. The terminal device may alternatively send the sixth message to the AMF #2 by using the user identity #2, to request to remove the association between the user identity #1 and the user identity #2.

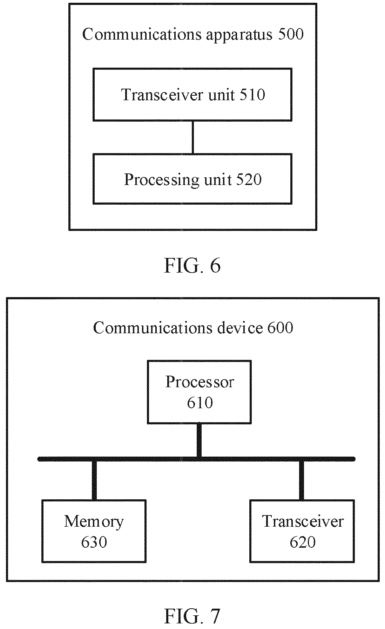

The foregoing describes in detail the user identity association methods provided in embodiments of this application with reference to FIG. 2 to FIG. 5. The following describes in detail communications apparatuses according to embodiments of this application with reference to FIG. 6 and FIG. 7.

FIG. 6 is a schematic block diagram of a communications apparatus 500 according to an embodiment of this application. As shown in the figure, the communications apparatus 500 may include a transceiver unit 510 and a processing unit 520.

In a possible design, the communications apparatus 500 may be the first device in the foregoing method embodiments, or may be a chip configured to implement a function of the first device in the foregoing method embodiments.

Specifically, the communications apparatus 500 may correspond to the first device in the method 200 to the method 400 in embodiments of this application. The communications apparatus 500 may include a unit configured to perform methods performed by the first device in the method 200 in FIG. 2 to the method 400 in FIG. 5. In addition, each unit in the communications apparatus 500 and the foregoing other operations and/or functions are intended to implement corresponding procedures of the method 200 in FIG. 2 and FIG. 3, the method 300 in FIG. 4, and the method 400 in FIG. 5. It should be understood that a specific process in which each unit performs the foregoing corresponding step has been described in detail in the foregoing method embodiments. For brevity, details are not described herein again.

In another possible design, the communications apparatus 500 may be the second device in the foregoing method embodiments, or may be a chip configured to implement a function of the second device in the foregoing method embodiments.

Specifically, the communications apparatus 500 may correspond to the second device in the method 200 to the method 400 in embodiments of this application. The communications apparatus 500 may include a unit configured to perform methods performed by the second device in the method 200 in FIG. 2 to the method 400 in FIG. 5. In addition, each unit in the communications apparatus 500 and the foregoing other operations and/or functions are intended to implement corresponding procedures of the method 200 in FIG. 2 and FIG. 3, the method 300 in FIG. 4, and the method 400 in FIG. 5. It should be understood that a specific process in which each unit performs the foregoing corresponding step has been described in detail in the foregoing method embodiments. For brevity, details are not described herein again.

In another possible design, the communications apparatus 500 may be the terminal device in the foregoing method embodiments, or may be a chip configured to implement a function of the terminal device in the foregoing method embodiments.

Specifically, the communications apparatus 500 may correspond to the terminal device in the method 200 to the method 400 in embodiments of this application. The communications apparatus 500 may include a unit configured to perform methods performed by the terminal device in the method 200 in FIG. 2 to the method 400 in FIG. 5. In addition, each unit in the communications apparatus 500 and the foregoing other operations and/or functions are intended to implement corresponding procedures of the method 200 in FIG. 2 and FIG. 3, the method 300 in FIG. 4, and the method 400 in FIG. 5. It should be understood that a specific process in which each unit performs the foregoing corresponding step has been described in detail in the foregoing method embodiments. For brevity, details are not described herein again.

It should be understood that the transceiver unit in the communications apparatus 500 may correspond to a transceiver 620 in a communications device 600 shown in FIG. 7, and the processing unit 520 in the communications apparatus 500 may correspond to a processor 610 in the communications device 600 shown in FIG. 7.

FIG. 6 is a schematic block diagram of a communications device 600 according to an embodiment of this application. As shown in the figure, the communications device 600 includes a processor 610 and a transceiver 620. The processor 610 is coupled to a memory, and is configured to execute instructions stored in the memory, to control the transceiver 620 to send a signal and/or receive a signal. Optionally, the communications device 600 further includes a memory 630, configured to store instructions.

It should be understood that the processor 610 and the memory 630 may be integrated into one processing apparatus, and the processor 610 is configured to execute program code stored in the memory 630, to implement the foregoing function. During specific implementation, the memory 630 may alternatively be integrated into the processor 610, or may be independent of the processor 610.

It should be further understood that the transceiver 620 may include a receiver (or referred to as a receiver machine) and a transmitter (or referred to as a transmitter machine). The transceiver may further include an antenna. There may be one or more antennas.

In a possible design, the communications device 600 may be the first device in the foregoing method embodiments, or may be a chip configured to implement a function of the first device in the foregoing method embodiments.

Specifically, the communications device 600 may correspond to the first device in the method 200 to the method 400 in embodiments of this application, and the communications device 600 may include a unit configured to perform methods performed by the first device in the method 200 in FIG. 2 to the method 400 in FIG. 5. In addition, each unit in the communications device 600 and the foregoing other operations and/or functions are intended to implement corresponding procedures of the method 200 in FIG. 2 and FIG. 3, the method 300 in FIG. 4, and the method 400 in FIG. 5. It should be understood that a specific process in which each unit performs the foregoing corresponding step has been described in detail in the foregoing method embodiments. For brevity, details are not described herein again.

In another possible design, the communications device 600 may be the second device in the foregoing method embodiments, or may be a chip configured to implement a function of the second device in the foregoing method embodiments.

Specifically, the communications device 600 may correspond to the second device in the method 200 to the method 400 in embodiments of this application, and the communications device 600 may include a unit configured to perform methods performed by the second device in the method 200 in FIG. 2 to the method 400 in FIG. 5. In addition, each unit in the communications device 600 and the foregoing other operations and/or functions are intended to implement corresponding procedures of the method 200 in FIG. 2 and FIG. 3, the method 300 in FIG. 4, and the method 400 in FIG. 5. It should be understood that a specific process in which each unit performs the foregoing corresponding step has been described in detail in the foregoing method embodiments. For brevity, details are not described herein again.

In another possible design, the communications device 600 may be the terminal device in the foregoing method embodiments, or may be a chip configured to implement a function of the terminal device in the foregoing method embodiments.

Specifically, the communications device 600 may correspond to the terminal device in the method 200 to the method 400 in embodiments of this application. The terminal device 600 may include a unit configured to perform methods performed by the terminal device in the method 200 in FIG. 2 to the method 400 in FIG. 5. In addition, each unit in the communications device 600 and the foregoing other operations and/or functions are intended to implement corresponding procedures of the method 200 in FIG. 2 and FIG. 3, the method 300 in FIG. 4, and the method 400 in FIG. 5. It should be understood that a specific process in which each unit performs the foregoing corresponding step has been described in detail in the foregoing method embodiments. For brevity, details are not described herein again.

It should be understood that a specific process in which each unit performs the foregoing corresponding step has been described in detail in the foregoing method embodiments. For brevity, details are not described herein again.

Based on the methods provided in embodiments of this application, this application further provides a computer program product. The computer program product includes computer program code. When the computer program code is run on a computer, the computer is enabled to perform the user identity association method in any one of the embodiments shown in FIG. 2 to FIG. 5.

According to the methods provided in embodiments of this application, this application further provides a computer-readable medium. The computer-readable medium stores program code. When the program code is run on a computer, the computer is enabled to perform the user identity association method in any one of the embodiments shown in FIG. 2 to FIG. 5.

According to the methods provided in embodiments of this application, this application further provides a system, including the foregoing first device, second device, and terminal device.

All or some of embodiments may be implemented by using software, hardware, firmware, or any combination thereof. When the software is used for implementation, all or some of embodiments may be implemented in a form of a computer program product. The computer program product includes one or more computer instructions. When the computer instructions are loaded and executed on a computer, some or all of the procedures or the functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible by a computer, or a data storage device, such as a server or a data center, integrating one or more available media. The available medium may be a magnetic medium (for example, a floppy disk, a hard disk, or a magnetic tape), an optical medium (for example, a high-density digital video disc (digital video disc, DVD)), or a semiconductor medium (for example, a solid-state drive (solid-state drive, SSD)).

Network elements in the foregoing apparatus embodiments may completely correspond to network elements in the method embodiments. A corresponding unit performs a corresponding step. For example, a transceiver unit (transceiver) performs a receiving or sending step in the method embodiments, and a processing unit (a processor) may perform a step other than the sending or receiving step. For a function of a specific unit, refer to a corresponding method embodiment. There may be one or more processors.

In this application, "at least one" refers to one or more, and "a plurality of" refers to two or more. The term "and/or" describes an association relationship between associated objects, and indicates that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be in a singular or plural form.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing in the entire specification does not necessarily refer to a same embodiment. In addition, these particular features, structures, or characteristics may be combined in one or more embodiments in any appropriate manner. It should be understood that magnitude of sequence numbers of the foregoing processes does not mean a performing sequence of the processes in various embodiments of this application. The performing sequence of the processes should be determined according to functions and internal logic of the processes, and should not constitute any limitation to the processes implemented in embodiments of this invention.

The terms such as "unit", and "system" used in this specification are used to indicate computer-related entities, hardware, firmware, combinations of hardware and software, software, or software being executed. For example, a component may be but is not limited to a process that is run on a processor, a processor, an object, an executable file, an executive thread, a program, and/or a computer. As shown in figures, both an application and a computing device that are run on a computing device may be components. One or more components may reside within a process and/or an execution thread, and a component may be located on one computer and/or distributed between two or more computers. In addition, these components may be executed from various computer-readable media that store various data structures. The components may communicate with each other by using a local and/or remote process based on, for example, a signal having one or more data packets (for example, data from two components interacting with another component in a local system, a distributed system, and/or across a network such as the internet interacting with another system by using a signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in embodiments.

In addition, function units in embodiments of this application may be integrated into one processing unit, each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or a part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Therefore, the protection scope of this application shall be subject to the protection scope of the claims.

## Claims

1. A user identity association method, wherein the method is performed in a network communications system, the network communications system comprises a terminal device, a first device, and a second device, the terminal device comprises a first user identity and a second user identity, the first device serves the first user identity, the second device serves the second user identity, and the method comprises:
sending (201), by the terminal device, a first message to the first device by using the first user identity, wherein the first message is indicating a request that the first user identity be associated with the second user identity, and the first message is further indicating information about the second user identity; and
receiving (204), by the terminal device, a fourth message from the first device by using the first user identity, wherein the fourth message is sent by the first device based on a third message which is indicating the first device to determine that the first user identity is associated with the second user identity and is further indicating information about the first user identity, and wherein the fourth message is indicating the terminal device to determine that the first user identity is associated with the second user identity.

2. The method according to claim 1, wherein the first message further comprises one or more of the following information: proxy paging indication information, proxy tracking area update TAU indication information, and proxy switching indication information.

3. The method according to claim 1 or 2, wherein the method further comprises:
receiving (S207), by the terminal device, a fifth message from the first device by using the first user identity, wherein the fifth message is used to indicate to allow the first user identity to be associated with the second user identity.

4. The method according to any one of claims 1 to 3, wherein the method further comprises:
sending (S307), by the terminal device, an eighth message to the second device by using the second user identity, wherein the eighth message is used to indicate to request the first user identity to be associated with the second user identity, and the eighth message comprises or indicates the information about the first user identity.

5. The method according to claim 4, wherein the eighth message further comprises one or more of the following information: proxy paging indication information, proxy TAU indication information, and proxy switching indication information.

6. The method according to claim 4 or 5, wherein the method further comprises, after sending (307), by the terminal device, the eighth message:
receiving (S309), by the terminal device, a ninth message from the second device by using the second user identity, wherein the ninth message is used to indicate to allow the first user identity to be associated with the second user identity.

7. The method according to any one of claims 1 to 6, wherein the method further comprises:
receiving (S209), by the terminal device, a tenth message from the second device by using the second user identity, wherein the tenth message is used to indicate whether the first user identity is allowed to be associated with the second user identity, and the tenth message is further used to indicate the information about the first user identity.

8. The method according to claim 7, wherein the tenth message further comprises one or more of the following information: proxy paging indication information, proxy TAU indication information, and proxy switching indication information.

9. The method according to claim 7 or 8, wherein the method further comprises, after receiving (S209), by the terminal device, the tenth message:
determining (S210), by the terminal device, that the first user identity is allowed to be associated with the second user identity; and
sending (S211), by the terminal device, an eleventh message to the second device by using the second user identity, wherein the eleventh message is used to indicate to allow the first user identity to be associated with the second user identity.

10. The method according to any one of claims 1 to 9, wherein after (S401) the first user identity is associated with the second user identity, the method further comprises:
sending (S403), by the terminal device, a sixth message to the first device by using the first user identity, wherein the sixth message is used to request to indicate to remove the association between the first user identity and the second user identity, and the sixth message is further used to indicate the information about the second user identity.

11. The method according to claim 10, wherein the sixth message further comprises one or more of the following information: proxy paging removal indication information, proxy TAU removal indication information, and proxy switching removal indication information.

12. A user identity association method, wherein the method is performed in a network communications system, the network communications system comprises a terminal device, a first device, and a second device, the terminal device comprises a first user identity and a second user identity, the first device serves the first user identity, the second device serves the second user identity, and the method comprises:
receiving (S201), by the first device, a first message from the terminal device, wherein the first message is sent by the terminal device by using the first user identity, the first message is indicating a request that the first user identity be associated with the second user identity, and the first message is further indicating information about the second user identity; and
sending (S202), by the first device, a second message to the second device based on the information about the second user identity, wherein the second message is indicating a request that the first user identity be associated with the second user identity.

13. A user identity association method, wherein the method is performed in a network communications system, the network communications system comprises a terminal device, a first device, and a second device, the terminal device comprises a first user identity and a second user identity, the first device serves the first user identity, the second device serves the second user identity, and the method comprises:
receiving (S202), by the second device, a second message from the first device, wherein the second message is sent by the first device based on a first message which is sent by the terminal device by using the first user identity to indicate a request that the first user identity be associated with the second user identity and is further indicating information about the second user identity, and wherein the second message is indicating a request that the first user identityte be associated with the second user identity; and
sending (S203), by the second device, a third message to the first device, wherein the third message is indicating to the first device to determine that the first user identity is associated with the second user identity, and the third message is further indicating information about the first user identity.

14. A communications apparatus, comprising a unit configured to implement a terminal device configured to perform the method according to any one of claims 1 to 11, to implement a first device configured to perform the method according to claim 12, or to implement a second device configured to perform the method according to claim 13.

15. A computer-readable storage medium, wherein the computer-readable storage medium stores a computer program, and when the computer program is executed on a processor of a terminal device, the processor is enabled to perform the method according to any one of claims 1 to 11, when the computer program is executed on a processor of a first device, the processor is enabled to perform the method according to claim 12, or when the computer program is executed on a processor of a second device, the processor is enabled to perform the method according to claim 13.

## Patentansprüche

1. Verfahren zum Zuordnen einer Benutzeridentität, wobei das Verfahren in einem Netzwerkkommunikationssystem durchgeführt wird, das Netzwerkkommunikationssystem ein Endgerät, eine erste Vorrichtung und eine zweite Vorrichtung umfasst, das Endgerät eine erste Benutzeridentität und eine zweite Benutzeridentität umfasst, die erste Vorrichtung die erste Benutzeridentität bedient, die zweite Vorrichtung die zweite Benutzeridentität bedient und das Verfahren umfasst:
Senden (201) einer ersten Nachricht durch das Endgerät an die erste Vorrichtung unter Verwendung der ersten Benutzeridentität, wobei die erste Nachricht eine Anforderung angibt, dass die erste Benutzeridentität der zweiten Benutzeridentität zugeordnet werden soll, und die erste Nachricht ferner Informationen über die zweite Benutzeridentität angibt; und
Empfangen (204) einer vierten Nachricht durch das Endgerät von der ersten Vorrichtung unter Verwendung der ersten Benutzeridentität, wobei die vierte Nachricht von der ersten Vorrichtung basierend auf einer dritten Nachricht gesendet wird, die der ersten Vorrichtung angibt, dass die erste Benutzeridentität der zweiten Benutzeridentität zugeordnet ist, und die ferner Informationen über die erste Benutzeridentität angibt, und wobei die vierte Nachricht dem Endgerät angibt, dass die erste Benutzeridentität der zweiten Benutzeridentität zugeordnet ist.

2. Verfahren nach Anspruch 1, wobei die erste Nachricht ferner eine oder mehrere der folgenden Informationen umfasst: Proxy-Paging-Angabeinformationen, Proxy-Tracking-Area-Update-Angabeinformationen (Proxy-TAU-Angabeinformationen) und Proxy-Switching-Angabeinformationen.

3. Verfahren nach Anspruch 1 oder 2, wobei das Verfahren ferner umfasst: Empfangen (S207) einer fünften Nachricht von der ersten Vorrichtung durch das Endgerät unter Verwendung der ersten Benutzeridentität, wobei die fünfte Nachricht verwendet wird, um anzugeben, dass das Zuordnen der ersten Benutzeridentität zu der zweiten Benutzeridentität erlaubt werden soll.

4. Verfahren nach einem der Ansprüche 1 bis 3, wobei das Verfahren ferner umfasst: Senden (S307) einer achten Nachricht durch das Endgerät an die zweite Vorrichtung unter Verwendung der zweiten Benutzeridentität, wobei die achte Nachricht verwendet wird, um anzugeben, dass das Zuordnen der ersten Benutzeridentität zu der zweiten Benutzeridentität angefordert werden soll, und die achte Nachricht die Informationen über die erste Benutzeridentität umfasst oder angibt.

5. Verfahren nach Anspruch 4, wobei die achte Nachricht ferner eine oder mehrere der folgenden Informationen umfasst: Proxy-Paging-Angabeinformationen, Proxy-TAU-Angabeinformationen und Proxy-Switching-Angabeinformationen.

6. Verfahren nach Anspruch 4 oder 5, wobei das Verfahren nach dem Senden (307) der achten Nachricht durch das Endgerät ferner umfasst:
Empfangen (S309) einer neunten Nachricht von der zweiten Vorrichtung durch das Endgerät unter Verwendung der zweiten Benutzeridentität, wobei die neunte Nachricht verwendet wird, um anzugeben, dass das Zuordnen der ersten Benutzeridentität zu der zweiten Benutzeridentität erlaubt werden soll.

7. Verfahren nach einem der Ansprüche 1 bis 6, wobei das Verfahren ferner umfasst: Empfangen (S209) einer zehnten Nachricht von der zweiten Vorrichtung durch das Endgerät unter Verwendung der zweiten Benutzeridentität, wobei die zehnte Nachricht verwendet wird, um anzugeben, ob die erste Benutzeridentität der zweiten Benutzeridentität zugeordnet werden darf, und die zehnte Nachricht ferner verwendet wird, um die Informationen über die erste Benutzeridentität anzugeben.

8. Verfahren nach Anspruch 7, wobei die zehnte Nachricht ferner eine oder mehrere der folgenden Informationen umfasst: Proxy-Paging-Angabeinformationen, Proxy-TAU-Angabeinformationen und Proxy-Switching-Angabeinformationen.

9. Verfahren nach Anspruch 7 oder 8, wobei das Verfahren nach dem Empfangen (S209) der zehnten Nachricht durch das Endgerät ferner umfasst:
Bestimmen (S210) durch das Endgerät, dass die erste Benutzeridentität der zweiten Benutzeridentität zugeordnet werden darf; und
Senden (S211) einer elften Nachricht durch das Endgerät an die zweite Vorrichtung unter Verwendung der zweiten Benutzeridentität, wobei die elfte Nachricht verwendet wird, um anzugeben, dass das Zuordnen der ersten Benutzeridentität zu der zweiten Benutzeridentität erlaubt werden soll.

10. Verfahren nach einem der Ansprüche 1 bis 9, wobei nach dem Zuordnen (S401) der ersten Benutzeridentität zu der zweiten Benutzeridentität das Verfahren ferner umfasst:
Senden (S403) einer sechsten Nachricht durch das Endgerät an die erste Vorrichtung unter Verwendung der ersten Benutzeridentität, wobei die sechste Nachricht verwendet wird, um das Entfernen der Zuordnung zwischen der ersten Benutzeridentität und der zweiten Benutzeridentität anzufordern, und die sechste Nachricht ferner verwendet wird, um die Informationen über die zweite Benutzeridentität anzugeben.

11. Verfahren nach Anspruch 10, wobei die sechste Nachricht ferner eine oder mehrere der folgenden Informationen umfasst: Proxy-Paging-Entfernungs-Angabeinformationen, Proxy-TAU-Entfernungs-Angabeinformationen und Proxy-Switching-Entfernungs-Angabeinformationen.

12. Verfahren zum Zuordnen einer Benutzeridentität, wobei das Verfahren in einem Netzwerkkommunikationssystem durchgeführt wird, das Netzwerkkommunikationssystem ein Endgerät, eine erste Vorrichtung und eine zweite Vorrichtung umfasst, das Endgerät eine erste Benutzeridentität und eine zweite Benutzeridentität umfasst, die erste Vorrichtung die erste Benutzeridentität bedient, die zweite Vorrichtung die zweite Benutzeridentität bedient und das Verfahren umfasst: Empfangen (S201) einer ersten Nachricht vom Endgerät durch die erste Vorrichtung, wobei die erste Nachricht vom Endgerät unter Verwendung der ersten Benutzeridentität gesendet wird, die erste Nachricht eine Anforderung angibt, dass die erste Benutzeridentität der zweiten Benutzeridentität zugeordnet werden soll, und die erste Nachricht ferner Informationen über die zweite Benutzeridentität angibt; und Senden (S202) einer zweiten Nachricht durch die erste Vorrichtung an die zweite Vorrichtung basierend auf den Informationen über die zweite Benutzeridentität, wobei die zweite Nachricht eine Anforderung angibt, dass die erste Benutzeridentität der zweiten Benutzeridentität zugeordnet werden soll.

13. Verfahren zum Zuordnen einer Benutzeridentität, wobei das Verfahren in einem Netzwerkkommunikationssystem durchgeführt wird, das Netzwerkkommunikationssystem ein Endgerät, eine erste Vorrichtung und eine zweite Vorrichtung umfasst, das Endgerät eine erste Benutzeridentität und eine zweite Benutzeridentität umfasst, die erste Vorrichtung die erste Benutzeridentität bedient, die zweite Vorrichtung die zweite Benutzeridentität bedient und das Verfahren umfasst:
Empfangen (S202) einer zweiten Nachricht von der ersten Vorrichtung durch die zweite Vorrichtung, wobei die zweite Nachricht von der ersten Vorrichtung basierend auf einer ersten Nachricht gesendet wird, die vom Endgerät unter Verwendung der ersten Benutzeridentität gesendet wird, um eine Anforderung anzugeben, dass die erste Benutzeridentität der zweiten Benutzeridentität zugeordnet werden soll, und die ferner Informationen über die zweite Benutzeridentität angibt,
und wobei die zweite Nachricht eine Anforderung angibt, dass die erste Benutzeridentität mit der zweiten Benutzeridentität zugeordnet werden soll; und
Senden (S203) einer dritten Nachricht durch die zweite Vorrichtung an die erste Vorrichtung, wobei die dritte Nachricht der ersten Vorrichtung angibt, dass die erste Benutzeridentität der zweiten Benutzeridentität zugeordnet ist, und die dritte Nachricht ferner Informationen über die erste Benutzeridentität angibt.

14. Kommunikationseinrichtung, die eine Einheit umfasst, die konfiguriert ist, um ein Endgerät zu implementieren, das konfiguriert ist, um das Verfahren nach einem der Ansprüche 1 bis 11 durchzuführen, eine erste Vorrichtung zu implementieren, die konfiguriert ist, um das Verfahren nach Anspruch 12 durchzuführen, oder eine zweite Vorrichtung zu implementieren, die konfiguriert ist, um das Verfahren nach Anspruch 13 durchzuführen.

15. Computerlesbares Speicherungsmedium, wobei das computerlesbare Speicherungsmedium ein Computerprogramm speichert, und wenn das Computerprogramm auf einem Prozessor eines Endgeräts ausgeführt wird, der Prozessor in die Lage versetzt wird, das Verfahren nach einem der Ansprüche 1 bis 11 durchzuführen, wenn das Computerprogramm auf einem Prozessor einer ersten Vorrichtung ausgeführt wird, der Prozessor in die Lage versetzt wird, das Verfahren nach Anspruch 12 durchzuführen, oder wenn das Computerprogramm auf einem Prozessor einer zweiten Vorrichtung ausgeführt wird, der Prozessor in die Lage versetzt wird, das Verfahren nach Anspruch 13 durchzuführen.

## Revendications

1. Procédé d'association d'identité d'utilisateur, dans lequel le procédé est effectué dans un système de communications de réseau, le système de communications de réseau comprend un dispositif terminal, un premier dispositif et un second dispositif, le dispositif terminal comprend une première identité d'utilisateur et une seconde identité d'utilisateur, le premier dispositif sert la première identité d'utilisateur, le second dispositif sert la seconde identité d'utilisateur, et le procédé comprend :
l'envoi (201), par le dispositif terminal, d'un premier message au premier dispositif à l'aide de la première identité d'utilisateur, dans lequel le premier message indique une demande d'association de la première identité d'utilisateur à la seconde identité d'utilisateur, et le premier message indique en outre des informations sur la seconde identité d'utilisateur ; et
la réception (204), par le dispositif terminal, d'un quatrième message du premier dispositif à l'aide de la première identité d'utilisateur, dans lequel le quatrième message est envoyé par le premier dispositif sur la base d'un troisième message qui indique au premier dispositif de déterminer que la première identité d'utilisateur est associée à la seconde identité d'utilisateur et qui indique en outre des informations sur la première identité d'utilisateur, et dans lequel le quatrième message indique au dispositif terminal de déterminer que la première identité d'utilisateur est associée à la seconde identité d'utilisateur.

2. Procédé selon la revendication 1, dans lequel le premier message comprend en outre une ou plusieurs des informations suivantes : informations d'indication de radiomessagerie par proxy, informations d'indication de mise à jour de zone de suivi TAU par proxy et informations d'indication de commutation par proxy.

3. Procédé selon la revendication 1 ou 2, dans lequel le procédé comprend en outre : la réception (S207), par le dispositif terminal, d'un cinquième message provenant du premier dispositif à l'aide de la première identité d'utilisateur, dans lequel le cinquième message est utilisé pour indiquer de permettre à la première identité d'utilisateur d'être associée à la seconde identité d'utilisateur.

4. Procédé selon l'une quelconque des revendications 1 à 3, dans lequel le procédé comprend en outre :
l'envoi (S307), par le terminal, d'un huitième message au second dispositif à l'aide de la seconde identité d'utilisateur, dans lequel le huitième message est utilisé pour indiquer de demander à ce que l'identité du premier utilisateur soit associée à la seconde identité d'utilisateur, et le huitième message comprend ou indique les informations sur la première identité d'utilisateur.

5. Procédé selon la revendication 4, dans lequel le huitième message comprend en outre une ou plusieurs des informations suivantes : informations d'indication de radiomessagerie par proxy, informations d'indication TAU par proxy et informations d'indication de commutation par proxy.

6. Procédé selon la revendication 4 ou 5, dans lequel le procédé comprend en outre, après l'envoi (307), par le dispositif terminal, du huitième message :
la réception (S309), par le dispositif terminal, d'un neuvième message provenant du second dispositif à l'aide de la seconde identité d'utilisateur, dans lequel le neuvième message est utilisé pour indiquer de permettre à la première identité d'utilisateur d'être associée à la seconde identité d'utilisateur.

7. Procédé selon l'une quelconque des revendications 1 à 6, dans lequel le procédé comprend en outre :
la réception (S209), par le dispositif terminal, d'un dixième message provenant du second dispositif à l'aide de la seconde identité d'utilisateur, dans lequel le dixième message est utilisé pour indiquer si la première identité d'utilisateur est autorisée à être associée à la seconde identité d'utilisateur, et le dixième message est en outre utilisé pour indiquer les informations sur la première identité d'utilisateur.

8. Procédé selon la revendication 7, dans lequel le dixième message comprend en outre une ou plusieurs des informations suivantes : informations d'indication de radiomessagerie par proxy, informations d'indication TAU par proxy et informations d'indication de commutation par proxy.

9. Procédé selon la revendication 7 ou 8, dans lequel le procédé comprend en outre, après réception (S209), par le dispositif terminal, du dixième message :
la détermination (S210), par le dispositif terminal, que la première identité d'utilisateur est autorisée à être associée à la seconde identité d'utilisateur ; et
l'envoi (S211), par le dispositif terminal, d'un onzième message au second dispositif à l'aide de la seconde identité d'utilisateur, dans lequel le onzième message est utilisé pour indiquer de permettre à la première identité d'utilisateur d'être associée à la seconde identité d'utilisateur.

10. Procédé selon l'une quelconque des revendications 1 à 9, dans lequel, après (S401) la première identité utilisateur est associée à la seconde identité utilisateur, le procédé comprend en outre :
l'envoi (S403), par le dispositif terminal, d'un sixième message au premier dispositif à l'aide de la première identité d'utilisateur, dans lequel le sixième message est utilisé pour demander d'indiquer de supprimer l'association entre la première identité d'utilisateur et la seconde identité d'utilisateur, et le sixième message est également utilisé pour indiquer les informations sur la seconde identité d'utilisateur.

11. Procédé selon la revendication 10, dans lequel le sixième message comprend en outre une ou plusieurs des informations suivantes : informations d'indication de suppression de radiomessagerie par proxy, informations d'indication de suppression TAU par proxy et informations d'indication de suppression de commutation par proxy.

12. Procédé d'association d'identité d'utilisateur, dans lequel le procédé est effectué dans un système de communications de réseau, le système de communications de réseau comprend un dispositif terminal, un premier dispositif et un second dispositif, le dispositif terminal comprend une première identité d'utilisateur et une seconde identité d'utilisateur, le premier dispositif sert la première identité d'utilisateur, le second dispositif sert la seconde identité d'utilisateur, et le procédé comprend :
la réception (S201), par le premier dispositif, d'un premier message provenant du dispositif terminal, dans lequel le premier message est envoyé par le dispositif terminal à l'aide de la première identité d'utilisateur, le premier message indique une demande d'association de la première identité d'utilisateur à la seconde identité d'utilisateur, et le premier message indique en outre des informations sur la seconde identité d'utilisateur ; et l'envoi (S202), par le premier dispositif, d'un deuxième message au second dispositif sur la base des informations sur la seconde identité d'utilisateur, dans lequel le deuxième message indique une demande d'association de la première identité d'utilisateur à la seconde identité d'utilisateur.

13. Procédé d'association d'identité d'utilisateur, dans lequel le procédé est effectué dans un système de communications de réseau, le système de communications de réseau comprend un dispositif terminal, un premier dispositif et un second dispositif, le dispositif terminal comprend une première identité d'utilisateur et une seconde identité d'utilisateur, le premier dispositif sert la première identité d'utilisateur, le second dispositif sert la seconde identité d'utilisateur, et le procédé comprend :
la réception (S202), par le second dispositif, d'un deuxième message en provenance du premier dispositif, dans lequel le deuxième message est envoyé par le premier dispositif sur la base d'un premier message envoyé par le dispositif terminal à l'aide de la première identité d'utilisateur pour indiquer une demande d'association de la première identité d'utilisateur à la seconde identité d'utilisateur et en indiquant en outre des informations sur la seconde identité d'utilisateur,
et dans lequel le deuxième message indique une demande d'association de la première identité d'utilisateur à la seconde identité d'utilisateur ; et
l'envoi (S203), par le second dispositif, d'un troisième message au premier dispositif, dans lequel le troisième message indique au premier dispositif de déterminer que la première identité d'utilisateur est associée à la seconde identité d'utilisateur, et le troisième message indique en outre des informations sur la première identité d'utilisateur.

14. Appareil de communication, comprenant une unité configurée pour mettre en œuvre un dispositif terminal configuré afin d'effectuer le procédé selon l'une quelconque des revendications 1 à 11, pour mettre en œuvre un premier dispositif configuré afin d'effectuer le procédé selon la revendication 12, ou pour mettre en œuvre un second dispositif configuré afin d'effectuer le procédé selon la revendication 13.

15. Support de stockage lisible par ordinateur, dans lequel le support de stockage lisible par ordinateur stocke un programme d'ordinateur, et lorsque le programme d'ordinateur est exécuté sur un processeur d'un dispositif terminal, le processeur est capable d'effectuer le procédé selon l'une quelconque des revendications 1 à 11, lorsque le programme d'ordinateur est exécuté sur un processeur d'un premier dispositif, le processeur est capable d'effectuer le procédé selon la revendication 12, ou lorsque le programme d'ordinateur est effectué sur un processeur d'un second dispositif, le processeur est capable d'effectuer le procédé selon la revendication 13.
